# EUROPEAN PATENT APPLICATION

(11) **EP 2 012 178 A1**
(43) Date of publication of application: **07.01.2009**
(21) Application number: 08703486.4
(22) Date of filing: 18.01.2008
(51) Int. Cl.: G02F 1/13363, G02B 5/30

(54) **LIQUID CRYSTAL PANEL AND LIQUID CRYSTAL DISPLAY DEVICE**

(30) Priority: 15.02.2007 JP 2007034840
(71) Applicant: Nitto Denko Corporation, Ibaraki-shi, Osaka 567-8680 (JP)
(72) Inventor: MIYAZAKI, Junzo, Ibaraki-shi Osaka 567-8680 (JP); MATSUDA, Shouichi, Ibaraki-shi Osaka 567-8680 (JP); NAGATSUKA, Tatsuki, Ibaraki-shi Osaka 567-8680 (JP)
(74) Representative: Koepe, Gerd L.
(86) International application number: PCT/JP2008/050636
(87) International publication number: WO 2008/099637

(57) **Abstract**

Provided is very thin liquid crystal panel and liquid crystal display apparatus with a high contrast ratio in an oblique direction, less light leakage, and a small color shift in an oblique direction. The liquid crystal panel of the present invention includes a liquid crystal cell, a first polarizer arranged on one side of the liquid crystal cell, a second polarizer arranged on the other side of the liquid crystal cell, a first optical element arranged between the first polarizer and the liquid crystal cell, and a second optical element arranged between the first optical element and the liquid crystal cell. The first optical element has substantially optically negative uniaxial property, and the second optical element exhibits a refractive index ellipsoid of nx > nz > ny, and is formed of one or more kinds of polycylic compound having a -SO₃M group and/or a -COOM group (M represents a counter ion).

## Description

### TECHNICAL FIELD

The present invention relates to a liquid crystal panel having a liquid crystal cell, a polarizer, and an optical element. The present invention also relates to a liquid crystal display apparatus using the above liquid crystal panel.

### BACKGROUND ART

A liquid crystal display apparatus has noticeable features such as thinness, light weight, and low power consumption. Therefore, the liquid crystal display apparatus has been widely used in mobile equipment such as a cellular phone and a watch, OA equipment such as a personal computer monitor and a notebook computer, household electric products such as a video camera and a liquid crystal television, and the like. The reason why the liquid crystal display apparatus has been widely used as such is that the defects such as the variation in display characteristics depending upon the viewing angle of a screen, and the malfunction caused by a high temperature, an extremely low temperature, or the like are being overcome by technical innovation. However, as applications cover a broader range, various properties tailored for the respective applications have been required. For example, in a conventional liquid crystal display apparatus, regarding the viewing angle properties, it has been considered sufficient that a contrast ratio of white/black displays may be about 10 in an oblique direction. This definition is derived from the contrast ratio of black ink printed on white paper such as newspaper and a magazine. However, in a stationary large television application, a number of people watch a screen concurrently, so a display that can be viewed well even from different viewing angles is required. That is, the contrast ratio of white/black displays is required to be, for example, 20 or more. Further, in the case of a large display, even if viewers do not move, watching four corners of a screen is equivalent to watching a screen in different viewing angle directions. Therefore, it is important that a display is uniform without unevenness over the entire screen of the liquid crystal panel.

At present, a liquid crystal display apparatus (for example, used for a television application) having a liquid crystal cell widely adopts an in-plane switching (IPS) system as one drive mode. This system is characterized in that liquid crystal molecules homogeneously aligned in the absence of an electric field are driven with a lateral electric field, whereby a display with a vivid color can be obtained. However, in the conventional liquid crystal display apparatus having a liquid crystal cell of an IPS system, there are problems of deterioration in display characteristics, such as the decrease in a contrast ratio in an oblique direction and the coloring of an image that varies depending upon the viewing angle (which is also referred to as a color shift in an oblique direction).

In order to solve the above problems, it has been disclosed that the display characteristics in an oblique direction can be improved, using a λ/2 plate exhibiting a refractive index profile of nx > nz > ny (it should be noted that the refractive indices in a slow axis direction, a fast axis direction, and a thickness direction of a film are respectively defined as nx, ny, and nz) (for example, Patent Document 1).

The above λ/2 plate exhibiting a refractive index profile of nx > nz > ny is produced by attaching shrinkable films on both sides of a polymer film, and stretching the resultant polymer film so that it expands in a thickness direction. Therefore, the thickness of the λ/2 plate to be produced becomes large, whichmakes it difficult to reduce the thickness of a liquid crystal display apparatus.
Patent Document 1: JP 2006-72309 A

### DISCLOSURE OF THE INVENTION

### PROBLEMS TO BE SOLVED BY THE INVENTION

An object of the present invention is to provide very thin liquid crystal panel and liquid crystal display apparatus with a high contrast ratio in an oblique direction, less light leakage, and a small color shift in an oblique direction.

### MEANS FOR SOLVING THE PROBLEMS

A liquid crystal panel of the present invention has a liquid crystal cell, a first polarizer arranged on one side of the liquid crystal cell; a second polarizer arranged on the other side of the liquid crystal cell, a first optical element arranged between the first polarizer and the liquid crystal cell, and a second optical element arranged between the first optical element and the liquid crystal cell. The first optical element has substantially optically negative uniaxial property, and the second optical element exhibits a refractive index ellipsoid of nx > nz > ny, and is formed of one or more kinds of polycylic compound having a -SO₃M group and/or a -COOM group (M represents a counter ion).

In a preferred embodiment, the polycyclic compound has a heterocycle.
In a preferred embodiment, a nitrogen atom is contained as a heteroatom in the heterocycle of the above polycylic compound.

In a preferred embodiment, the above polycyclic compound is represented by General Formula (1). 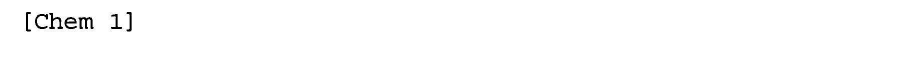 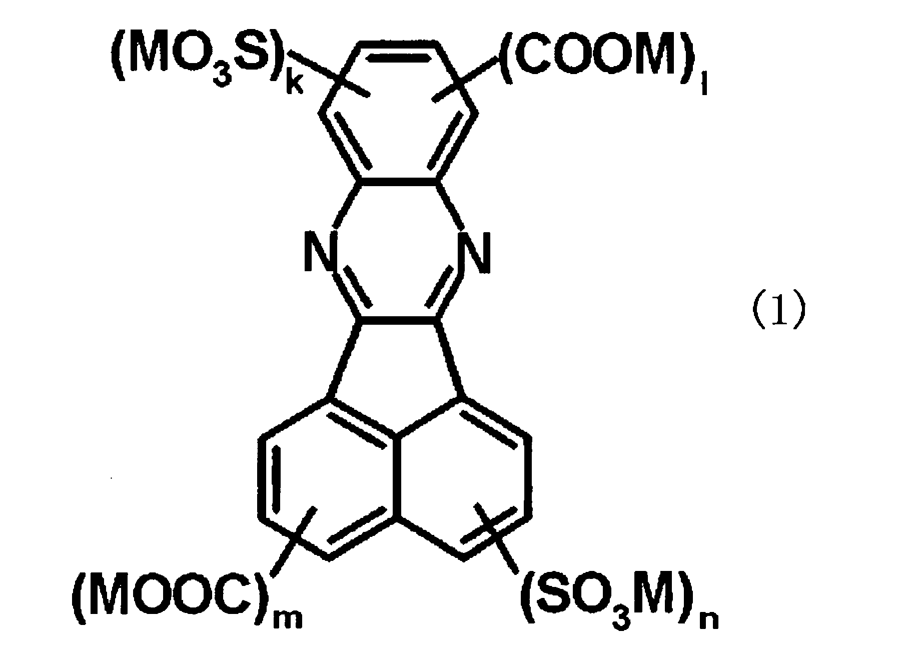 (in General Formula (1), M represents a counter ion, k and l respectively represent integers of 0 to 4 independently, the sum of k and 1 is an integer of 0 to 4, m and n respectively represent integers of 0 to 6 independently, the sum of m and n is an integer of 0 to 6, and k, 1, m and n do not represent 0 at the same time.)

In a preferred embodiment, an Nz coefficient of the above second optical clement is 0.05 to 0.45.

In a preferred embodiment, an in-plane retardation Re[590] of the above second optical element at a wavelength of 590 nm and 23°C is 100 to 300 nm.

In a preferred embodiment, a thickness of the above second optical element is 0.05 to 10 µm.

In a preferred embodiment, a thickness direction retardation Rth[590] of the above first optical element at a wavelength of 590 nm and 23°C is 10 to 100 nm.
In a preferred embodiment, the above first optical element includes a polymer film containing a cellulose esteras a main component.

In a preferred embodiment, a slow axis of the above second optical element is substantially perpendicular to an absorption axis of the above first polarizer.

In a preferred embodiment, a third optical element having substantially optical isotropy is arranged between the above second polarizer and the above liquid crystal cell.

In a preferred embodiment, an absolute value of a thickness direction retardation value Rth[590] of the above third optical element at a wavelength of 590 nm and 23°C is 10 nm or less.

In a preferred embodiment, the above third optical element includes a polymer film containing, as a main component, at least one selected from a cellulose ester, a cycloolefin-based resin obtained by hydrogenating a ring-opening polymer of a norbornene-based monomer, an addition copolymer of a norbornene-based monomer and an α-olefin monomer, and an addition copolymer of a maleimide-based monomer and an olefin monomer.

In a preferred embodiment, a drive mode of the above liquid crystal cell is an IPS mode.

According to another aspect of the present invention, a liquid crystal display apparatus is provided. The liquid crystal display apparatus includes the above liquid crystal panel.

### EFFECTS OF THE INVENTION

According to the present invention, very thin liquid crystal panel and liquid crystal display apparatus with a high contrast ratio in an oblique direction, less light leakage, and a small color shift in an oblique direction can be provided.
The above effect can be expressed by arranging a first optical element, a second optical element and a third optical element having particular optical properties, and a liquid crystal cell in a particular positional relationship, and forming the second optical element exhibiting a refractive index ellipsoid of nx > nz > ny of a particular polycyclic compound.

### BRIEF DESCRIPTION OF THE DRAWINGS

[Fig. **1**] Fig. **1** is a schematic sectional view of a liquid crystal panel according to a preferred embodiment of the present invention.
[FIGS. **2A** and **2B**] FIG. **2A** is a schematic perspective view of the liquid crystal panel of FIG. **1** employing O-mode, and FIG. **2B** is a schematic perspective view of the liquid crystal panel of FIG. **1** employing E-mode.
[FIG. **3**] FIG. **3** is a schematic view illustrating a concept of a typical production process of a polarizer used in the present invention.
[FIG. **4**] FIG. **4** is a schematic sectional view of a liquid crystal display apparatus according to a preferred embodiment of the present invention.
[FIG. **5**] FIG. **5** is a radar chart diagram of a liquid crystal panel obtained in Example 1.
[FIG. **6**] FIG. **6** is a radar chart diagram of a liquid crystal panel obtained in Comparative Example 1.

### DESCRIPTION OF REFERENCE NUMERALS

- **10**: liquid crystal cell
- **11, 11'**: substrate
- **12**: liquid crystal layer
- **21**: first polarizer
- **22**: second polarizer
- **30**: first optical element
- **40**: second optical element
- **60, 60'**: protective layer
- **70, 70'**: surface treated layer
- **80**: brightness enhancement film
- **110**: prism sheet
- **120**: light guide plate
- **130**: lamp
- **100**: liquid crystal panel
- **200**: delivery part
- **210**: aqueous iodine solution bath
- **220**: aqueous solution bath containing boric acid and potassium iodide
- **230**: aqueous solution bath containing potassium iodide
- **240, 309**: drying means
- **250**: polarizer
- **260**: winding part
- **301**: first delivery part
- **302**: polymer film
- **303**: second delivery part
- **304, 306, 315, 317**: shrinkable film
- **307, 308**: laminate roll
- **314**: first winding part
- **316**: third winding part
- **319**: third winding part
- **400**: liquid crystal display apparatus

### BEST MODE FOR CARRYING OUT THE INVENTION

In the specification of the present invention, in-plane refractive indices in a slow axis direction and a fast axis direction are respectively defined as nx and ny, and a thickness direction refractive index is defined as nz. The slow axis direction refers to a direction in which an in-plane refractive index becomes maximum.
In the specification of the present invention, for example, ny = nz includes not only a case where ny and nz are exactly the same, but also a case where ny and nz are substantially same.
The phrase"substantially perpendicular"in the specification of the present invention includes the case where an angle formed by two axes (for example, an absorption axis of a polarizer and an absorption axis of another polarizer) is 90° ± 2.0°, preferably 90° ± 1.0°, and more preferably 90° ± 0.5°.
The phrase "substantially parallel" in the specification of the present invention includes the case where an angle formed by two axes (for example, a slow axis of a retardation film and an absorption axis of a polarizer) is 0 ° ± 2.0°, preferably 0 ° ± 1.0°, and more preferably 0° ± 0.5°.

### A. Outline of entire liquid crystal panel

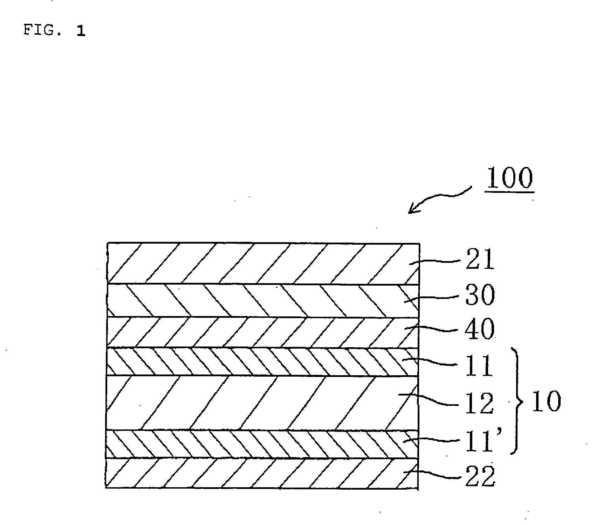

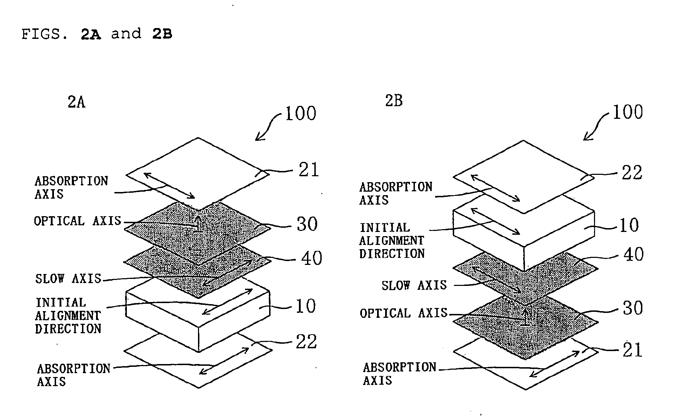

Fig. 1 is a schematic sectional view of a liquid crystal panel according to a preferred embodiment of the present invention. Fig. **2A** is a schematic perspective view of the liquid crystal panel employing O-mode, and Fig. **2B** is a schematic perspective view of the liquid crystal panel employing E-mode. Note that, a ratio among length, width, and thickness of each member in Figs. **1****,** **2A**, and **2B** is different from that of an actual member for clarity. A liquid crystal panel **100** includes a liquid crystal cell **10** having a liquid crystal layer containing liquid crystal molecules homogeneously aligned in the absence of an electric field, a first polarizer **21** arranged on one side (a viewer side in FIG. **2A**) of the liquid crystal cell **10,** a second polarizer **22** arranged on the other side (a backlight side in FIG. **2A**) of the liquid crystal cell **10**, and a first optical element **30** and a second optical element **40** arranged between the f irst polarizer **21** and the liquid crystal cell **10**. Notethat, practically, anysuitable protective layers (not shown) can be arranged on outer sides of the first polarizer **21** and the second polarizer **22**. Note that, preferably, an absorption axis of the first polarizer **21** and an absorption axis of the second polarizer **22** are substantially perpendicular to each other, and an absorption axis of the first polarizer **21** and a slow axis of the second optical element **40** are substantially perpendicular to each other.

The first optical element **30** has a substantially optically negative uniaxial property. The second optical element **40** exhibits a refractive index ellipsoid of nx > nz > ny, and is formed of one or more kinds of polycyclic compound having a -SO₃M group and/or a -COOM group (M represents a counter ion). The third optical element 50hassubstantiallyopticalisotropy. Bylaminatingsuchparticular optical elements respectively on a liquid crystal cell, very satisfactory optical compensation is conducted, and consequently, a liquid crystal display apparatus with a high contrast in an oblique direction of the liquid crystal display apparatus and a small color shift amount in the oblique direction can be realized.

Preferably, the second polarizer **22** is arranged so that an absorption axis thereof is substantially parallel to an initial alignment direction of the liquid crystal cell **10**. Thefirstpolarizer **21** is arranged so that an absorption axis thereof is substantially perpendicular to the initial alignment directionof the liquid crystal cell **10**.

The liquid crystal panel of the present invention may be of so-called O-mode or so-called E-mode. The term "liquid crystal panel of O-mode" refers to a liquid crystal panel in which an absorption axis of a polarizer arranged on a backlight side of a liquid crystal cell and an initial alignment direction of the liquid crystal cell are parallel to each other. The term "liquid crystal panel of E-mode" refers to a liquid crystal panel in which an absorption axis of a polarizer arranged on a backlight side of a liquid crystal cell and the initial alignment direction of the liquid crystal cell are perpendicular to each other. In the case of the liquid crystal panel of O-mode, as shown in Fig. **2A****,** the first polarizer **21**, the first optical element **30,** and the second optical element **40** are preferably arranged on a viewer side of the liquid crystal cell **10**, and the second polarizer **22** is preferably arranged on a backlight side of the liquid crystal cell **10.** In the case of an E-mode liquid crystal panel, as shown in FIG. **2B**, the first polarizer **21**, the first optical element **30**, and the second optical element **40** are preferably arranged on a backlight side of the liquid crystal cell **10**, and the second polarizer **22** is preferably arranged on a viewer side of the liquid crystal cell **10**. In the present invention, an O-mode as shown in FIG. **2A** is preferred. This is because more satisfactory optical compensation is realized with the O-mode arrangement. More specifically, in the O-mode arrangement, the second optical element including a retardation film is arranged on a farther side from the backlight, so a liquid crystal display apparatus that is unlikely to be adversely influenced by heat of the backlight and has small display unevenness can be obtained.

The liquid crystal panel of the present invention is not limited to the above embodiment, and for example, other constituent members (for example, an optical pressure-sensitive adhesive with isotropy and an isotropic film) may be arranged between respective constituent members shown in FIG. **1**. Hereinafter, the constituent members of the liquid crystal panel of the present invention will be described in detail.

### B. Liquid crystal cell

Referring to Fig. **1****,** the liquid crystal cell **10** used in the present invention is provided with a pair of substrates **11** and **11'** and a liquid crystal layer **12** as a display medium interposed between the substrates **11** and **11'**. One substrate (active matrix substrate) **11**' is provided with as witching element (typically TFT) for controlling electrooptic properties of liquid crystals, a scanning line for providing a gate signal to the switching element and a signal line for providing a source signal thereto (all not shown). The other substrate (color filter substrate) **11** is provided with color filters (not shown) and black matrix (not shown). The color filters may be provided on the active matrix substrate **11'** sideaswell. Adistance (cell gap) between the substrates **11** and **11'** is controlled by a spacer (not shown). An alignment film (not shown) formed of, for example, polyimide is provided on a side of each of the substrates **11** and **11'**, which is in contact with the liquid crystal layer **12**.

The above liquid crystal layer **12** preferably includes a liquid crystal layer containing liquid crystal molecules aligned homogeneously in the absence of an electric field. The liquid crystal layer (eventually, the liquid crystal cell) typically exhibits a refractive index profile of nx > ny = nz.

The phrase "initial alignment direction of the liquid crystal cell" refers to a direction providing a maximum in-plane refractive index of the liquid crystal layer by alignment of the liquid crystal molecules in the liquid crystal layer in the absence of an electric field. Typical examples of drive mode using the liquid crystal layer exhibiting such refractive index profile include in-plane switching (IPS) mode, fringe field switching (FFS) mode, and ferroelectric liquid crystal (FLC) mode. Specific examples of liquid crystals used for those drive modes include nematic liquid crystals and smectic liquid crystals. For example, the nematic liquid crystals are used for the IPS mode and the FFS mode, and the smectic liquid crystals are used for the FLC mode.

In the above IPS mode, homogeneously aligned liquid crystal molecules in the absence of an electric field respond in such an electric field as parallel to substrates generated between a counter electrode and a pixel electrode each formed of metal (also referred to as a horizontal electric field) by utilizing an electrically controlled birefringence (ECB) effect. To be more specific, as described in "Monthly Display July" (p. 83 to p. 88, published by Techno Times Co., Ltd., 1997) or "Ekisho vol. 2, No. 4" (p. 303 to p. 316, published by Japanese Liquid Crystal Society, 1998), a normally black mode provides completely black display in the absence of an electric field by: adjusting an alignment direction of the liquid crystal cell without application of an electric field, to a direction of an absorption axis of one polarizer; and arranging polarizing plates above and below the liquid crystal cell to be perpendicular to each other. Under application of an electric field, liquid crystal molecules rotate while remaining parallel to substrates, to thereby obtain a transmittance in accordance with a rotation angle. Note that the IPS mode includes super in-plane switching (S-IPS) mode and advanced super in-plane switching (AS-IPS) mode each employing a V-shaped electrode, a zigzag electrode, or the like. Examples of a commercially available liquid crystal display apparatus of such IPS mode include: 20V-type wide liquid crystal television "Wooo" (trade name, manufactured by Hitachi, Ltd.); 19-type liquid crystal display "ProLite E481S-1" (trade name, manufactured by Iiyama Corporation); and 17-type TFT liquid crystal display "FlexScanL565" (tradename, manufactured by Eizo Nanao Corporation).

In the above FFS mode, homogeneously aligned liquid crystal molecules in the absence of an electric field respond in such an electric field as parallel to substrates generated between a counter electrode and a pixel electrode each formed of transparent conductor (also referred to as a horizontal electric field) by utilizing an electrically controlled birefringence effect. Note that the horizontal electric field in the FFS mode is also referred to as fringe electric field, which can be generated by setting a distance between the counter electrode and the pixel electrode each formed oftransparentconductornarrowerthanacellgap. Tobemorespecific, as described in "Society for Information Display (SID) 2001 Digest" (p. 484 to p. 487) or JP 2002-031812 A, a normally black mode provides completely black display in the absence of an electric field by: adjusting an alignment direction of the liquid crystal cell without application of an electric field, to a direction of an absorption axis of one polarizer; and arranging polarizing plates above and below the liquid crystal cell to be perpendicular to each other. Under application of an electric field, liquid crystal molecules rotate while remaining parallel to substrates, to thereby obtain a transmittance in accordance with a rotation angle. Note that the above FFS mode includes advanced fringe field switching (A-FFS) mode and ultra fringe field switching (U-FFS) mode each employing a V-shaped electrode, a zigzag electrode, or the like. An example of a commercially available liquid crystal display apparatus of such FFS mode includes Tablet PC "M1400" (trade name, manufactured by Motion Computing, Inc.).

The above FLC mode utilizes property of ferromagnetic chiral smectic liquid crystals encapsulated between electrode substrates each having a thickness of about 1 to 2 µm to exhibit two stable states of molecular alignment, for example. To be more specific, the above ferroelectric chiral smectic liquid crystal molecules rotate within a plane parallel to the substrates and respond due to application of a voltage. The FLC mode can provide black and white displays based on the same principle as that of the above IPS mode or the above FFS mode. Further, the above FLC mode has such a feature in that a response speed is high compared with those in other drive modes. Note that, in the specification of the present invention, the above FLC mode includes surface stabilized ferroelectric liquid crystal (SS-FLC) mode, antiferroelectric liquid crystal (AFLC) mode, polymer stabilized ferroelectric liquid crystal (PS-FLC) mode, and V-shaped switching ferroelectric liquid crystal (V-FLC) mode.

The above homogeneously aligned liquid crystal molecules are obtained, as a result of interaction between substrates subjected to alignment treatment and the liquid crystal molecules, when alignment vectors of the above liquid crystal molecules are parallel to a substrate plane and uniformly aligned. Note that, in the specification of the present invention, homogenous alignment includes a case where the above alignment vectors are slightly tilted with respect to the substrate plane, that is, a case where the above liquid crystal molecules are pretilted. In a case where the liquid crystal molecules are pretilted, a pretilt angle is preferably 20° or less for maintaining a large contrast ratio and obtaining favorable display characteristics.

Any suitable nematic liquid crystals may be employed as the above nematic liquid crystals depending on the purpose. For example, the nematic liquid crystals may have positive dielectric anisotropy or negative dielectric anisotropy. A specific example of the nematic liquid crystals having positive dielectric anisotropy includes "ZLI-4535" (trade name, manufactured by Merck Ltd.). A specific example of the nematic liquid crystals having negative dielectric anisotropy includes "ZLI-2806" (trade name, manufactured by Merck Ltd.). Further, a difference between an ordinary refractive index (no) and an extraordinary refractive index (ne) , that is, a birefringent index (Δn_{LC}) of the above nematic liquid crystals can be appropriately selected in accordance with the response speed, transmittance, and the like of the above liquid crystals. However, the birefringence index is preferably 0.05 to 0.30, in general.

Any suitable smectic liquid crystals may be employed as the above smectic liquid crystals depending on the purpose. The smectic liquid crystals to be used preferably have an asymmetric carbon atom in a part of a molecular structure and exhibit ferroelectric property (also referred to as ferroelectric liquid crystals). Specific examples of the smectic liquid crystals exhibiting ferroelectric property include p-decyloxybenzylidene-p'-amino-2-methylbutylcinnamate, p-hexyloxybenzylidene-p'-amino-2-chloropropylcinnamate, and 4-o-(2-methyl)butylresorcylidene-4'-octylaniline. Further, examples of commercially available ferroelectric liquid crystals include ZLI-5014-000(trade name, capacitance of 2.88 nF, spontaneous polarizationof -2.8 C/cm², manufactured by Merck Ltd.), ZLI-5014-100 (trade name, capacitance of 3.19 nF, spontaneous polarization of -20.0 C/cm², manufactured by Merck Ltd.), and FELIX-008 (trade name, capacitance of 2.26 nF, spontaneous polarization of -9.6 C/cm², manufactured by Hoechst Aktiengesellschaft).

Any suitable cell gap may be employed as the cell gap (distance between substrates) of the above liquid crystal cell depending on the purpose. However, the cell gap is preferably 1.0 to 7.0 µm. A cell gap within the above range can reduce response time and provide favorable display characteristics.

### C. Polarizer

In the specification of the present invention, the term "polarizer" refers to an optical film capable of converting natural light or polarized light into any polarized light. Any suitable polarizer may be employed as a polarizer used in polarizing plate of the present invention. Preferably, a film capable of converting natural light or polarized light into linearly polarized light is used.

The above polarizer may have any suitable thickness. The thickness of the polarizer is typically 5 to 80 µm, preferably 10 to 50 µm, and more preferably 20 to 40 µm. A thickness of the polarizer within the above ranges can provide excellent optical properties and mechanical strength.

### C-1. Optical characteristics of polarizer

Atransmittance (alsoreferredtoassingleaxistransmittance) of the above polarizer measured by using a light having a wavelength of 440 nm at 23°C is preferably 41% or more, and more preferably 43% or more. Note that a theoretical upper limit of the single axis transmittance is 50%. A polarization degree is preferably 99.8 to 100%, and more preferably 99.9 to 100%. A transmittance and a polarization degree within the above ranges can further increase a contrast ratio in a front direction of a liquid crystal display apparatus employing the polarizer of the present invention.

The above single axis transmittance and the polarization degree can be measured by using a spectrophotometer "DOT-3" (trade name, manufactured by Murakami Color Research Laboratory). The above polarization degree can be determined by measuring a parallel transmittance (H₀) and a perpendicular transmittance (H₉₀) of the polarizer and using the following equation. Polarization degree (%)={(H₀-H₉₀)/(H₀+H₉₀)}^{1/2}×100. The above parallel transmittance (H₀) refers to a transmittance of a parallel laminate polarizer produced by piling two identical polarizers such that respective absorption axes of those are parallel to each other. Further, the above perpendicular transmittance (H₉₀) refers to a transmittance of a perpendicular laminate polarizer produced by piling two identical polarizers such that respective absorption axes thereof are perpendicular to each other. Note that the transmittance refers to a Y value obtained through color correction by a two-degree field of view (C source) in accordance with JIS Z8701-1982.

### C-2. Arrangement method of polarizer

Referring to Figs. **1****,** **2A,** and **2B****,** any suitable method may be employed as a method of arranging the first polarizer **21** and the second polarizer **22** depending on the purpose. Preferably, the above first polarizer **21** and the second polarizer **22** are each provided with an adhesive layer or a pressure-sensitive adhesive layer (both not shown) on a surface opposing the liquid crystal cell. Then, the first polarizer **21** is bonded to a surface of the first optical element **30,** and the second polarizer **22** is bonded to a surface of the third optical element **50**. In this way, contrast of a liquid crystal display apparatus employing the polarizers can be enhanced.

A thickness of the above adhesive layer or pressure-sensitive adhesive layer may be appropriately determined in accordance with intended use, adhesive strength, and the like. The adhesive layer has a thickness of generally 0.1 to 50 µm, preferably 0.1 to 20 µm, and particularly preferably 0.1 to 10 µm. The pressure-sensitive adhesive layer has a thickness of generally 1 to 100 µm, preferably 5 to 80 µm, and particularly preferably 10 to 50 µm.

Any suitable adhesive or pressure-sensitive adhesive may be employed for forming the above adhesive layer or pressure-sensitive adhesive layer in accordance with the kind of adherend. In particular, in a case where a film containing a polyvinyl alcohol-based resin as a main component is used for the polarizer, an aqueous adhesive is preferably used as the adhesive. An adhesive containing a polyvinyl alcohol-based resin as a main component is more preferably used.

The above first polarizer **21** is preferably arranged such that its absorption axis is substantially perpendicular to an absorption axis of the opposing second polarizer 22. With an increase in deviation from the above angle relationship of "substantially perpendicular", a contrast tends to decrease when used in a liquid crystal display apparatus.

### C-3. Optical film used in the polarizer

The above polarizer is formed of a stretched polymer film containing as a main component a polyvinyl alcohol-based resin, which contains a dichromatic substance, for example. The polymer film containing as a main component the above polyvinyl alcohol-based resin is produced through a method described in [Example 1] of JP 2000-315144 A, for example.

The above polyvinyl alcohol-based resin to be used may be prepared by: polymerizing a vinyl ester-based monomer to obtain a vinyl ester-based polymer; and saponifying the resultant vinyl ester-based polymer to convert a vinyl ester unit into a vinyl alcohol unit. Examples of the above vinyl ester-based monomer include vinyl formate, vinyl acetate, vinyl propionate, vinyl valerate, vinyl laurate, vinyl stearate, vinyl benzoate, vinyl pivalate, and vinyl versatate. Of those, vinyl acetate is preferred.

The above polyvinyl alcohol-based resin may have any suitable average polymerization degree. The average polymerization degree is preferably 1,200 to 3,600, more preferably 1,600 to 3,200, and most preferably 1,800 to 3,000. Note that the average polymerization degree of the polyvinyl alcohol-based resin can be measured through a method in accordance with JIS K6726-1994.

A saponification degree of the above polyvinyl alcohol-based resin is preferably 90.0 to 99.9 mol%, more preferably 95.0 to 99.9 mol%, and most preferably 98.0 to 99.9 mol% from a viewpoint of durability of the polarizer.

The above saponification degree refers to a ratio of units actually saponified into vinyl alcohol units to units which may be converted into vinyl alcohol units through saponification. Note that the saponification degree of the polyvinyl alcohol-based resin may be determined in accordance with JIS K6726-1994.

The polymer film containing as a main component a polyvinyl alcohol-based resin to be used in the present inventionmaypreferably contain polyvalent alcohol as a plasticizer. Examples of the polyvalent alcohol include ethylene glycol, glycerin, propylene glycol, diethyleneglycol, triethyleneglycol, tetraethyleneglycol, and trimethylolpropane. They may be used alone or in combination. In the present invention, ethylene glycol or glycerin is preferably used from the viewpoints of stretchability, transparency, thermal stability, and the like.

A use amount of the polyvalent alcohol in the present invention is preferably 1 to 30 (weight ratio), more preferably 3 to 25 (weight ratio) , and most preferably 0.05 to 0.3 (weight ratio) with respect to 100 of a total solid content in the polyvinyl alcohol-based resin. A use amount of the polyvalent alcohol within the above ranges can provide a polymer film having further improved coloring property, stretchability, and the like.

Any suitable dichromatic substance may be employed as the above dichromatic substance. Specific examples thereof include iodine and a dichromatic dye. In the specification of the present invention, the term "dichromatic" refers to optical anisotropy in which light absorption differs in two directions of an optical axis direction and a direction perpendicular thereto.

Examples of the above dichromatic dye include Red BR, Red LR, Red R, Pink LB, Rubin BL, Bordeaux GS, Sky Blue LG, Lemon Yellow, Blue BR, Blue 2R, Navy RY, Green LG, Violet LB, Violet B, Black H, Black B, Black GSP, Yellow 3G, Yellow R, Orange LR, Orange 3R, Scarlet GL, Scarlet KGL, Congo Red, Brilliant Violet BK, Supra Blue G, Supra Blue GL, Supra Orange GL, Direct Sky Blue, Direct First Orange S, and First Black.

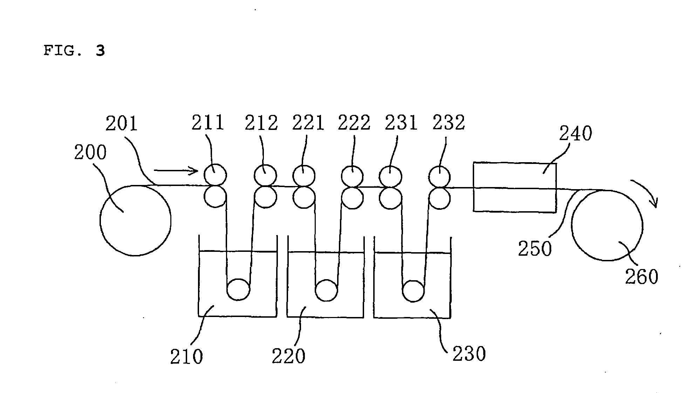

An example of a method of producing a polarizer will be described by referring to Fig. **3**. Fig.**3** is a schematic diagram illustrating an overview of a typical production process of a polarizer used in the present invention. For example, a polymer film **201** containing as a main component a polyvinyl alcohol-based resin is fed from a delivery part **200,** immersed in an aqueous iodine solution bath **210,** and subjected to swelling and coloring treatment under tension in a longitudinal direction of the film by rollers **211** and **212** at different speed ratios. Next, the film is immersed in a bath **220** of an aqueous solution containing boric acid and potassium iodide, and subjected to cross linking treatment under tension in a longitudinal direction of the film by rollers **221** and **222** at different speed ratios. The film subjected to crosslinking treatment is immersed in a bath **230** of an aqueous solution containing potassium iodide by rollers **231** and **232**, and subjected to water washing treatment. The film subjected to water washing treatment is dried by drying means **240** to adjust its moisture content, and taken up in a winding part **260**. The polymer film containing as a main component the above polyvinyl alcohol-based resin may be stretched to a 5 to 7 times length of the original length through the above process to produce the polarizer **250.**

The above polarizer may have any suitable moisture content, but the moisture content is preferably 5% to 40%, more preferably 10% to 30%, and most preferably 20% to 30%.

Note that in a case where polarizers are provided on both sides of a liquid crystal cell in the liquid crystal panel of the present invention, the polarizers may be the same or different from each other.

### D. First optical element

Referring to FIGS. **1****,** **2A**, and **2B****,** the first optical element **30** is arranged between the first polarizer **21** and the second optical element **40**. According to this embodiment, the first optical element functions as a protective layer of the polarizer on a cell side to prevent the degradation in the polarizer. Consequently,the display characteristics of the liquid crystal display apparatus can be maintained high for a long period of time. The first optical element 30 has substantially optically negative uniaxial property. The optical element having optically negative uniaxial property ideally has an optical axis in a normal direction.

In the specification of the present invention, the phrase "an element having substantially optically negative uniaxial property" refers to the one satisfying a refractive index profile of nx = ny > nz (which is also referred to as a negative C plate). The above refractive index profile is not strictly limited to nx = ny, and an in-plane refractive index difference only needs to be small (nx ≈ ny) to such a degree as not to adversely influence the display characteristics of the liquid crystal display apparatus practically.

In the present invention, the above first optical element is used for reducing light leakage in an oblique direction of a liquid crystal panel, in combination with the above second optical element. Generally, in a liquid crystal panel in which two polarizers are arranged on both sides of a liquid crystal cell so that absorption axes are perpendicular to each other, light leakage is unlikely to occur in a front direction. However, light leakage occurs in an oblique direction, and in the case where the absorption axes of the respective polarizers are set to be 0° and 90°, the light leakage amount at an azimuth of 45° in the oblique direction tends to be maximum. By reducing the light leakage amount, the contrast ratio in the oblique direction can be enhanced to decrease a color shift amount in the oblique direction.

### D-1. Optical properties of first optical element

An in-plane retardation value (Re [590]) of the first optical element used in the present invention, measured at a wavelength of 590nm and 23°C, is preferably 0 nm to 10 nm, more preferably 0 nm to 5 nm, and much more preferably 0 nm to 3 nm. The Re[590] can be obtained by an expression: Re[590] = (nx - ny) × d, where d(nm) is the thickness of the optical element. By setting the Re[590] of the above first optical element in the above range, excellent optical compensation of the liquid crystal cell is realized when the first optical element is combined with the second optical element described later.

The Rth [590] of the first optical element used in the present invention, measured at a wavelength of 590 nm and 23°C, is preferably 10 nm to 100 nm, more preferably 20 nm to 80 nm, andmuchmore preferably 30 nm to 50 nm. The Rth[590] can be obtained by an expression Rth [590] = (nx - nz) × d, where d(nm) is the thickness of the optical element. By setting the Re[590] of the above first optical element in the above range, excellent optical compensation of the liquid crystal cell is realized when the first optical element is combined with the second optical element described later.

### D-2. Means for arranging first optical element

Referring to FIGS. **1****,** **2A,** and **2B****,** as a method of arranging the above first optical element **30** between the first polarizer **21** and the second optical element **40,** any suitable method can be adopted depending on the purpose. Preferably, adhesive layers or pressure-sensitive adhesive layers are provided on both surfaces of the above first optical element **30**, and then, the first optical element **30** is attached to the first polarizer **21** and the second optical element **40**. By filling the gap between the respective optical elements with an adhesive layer or a pressure-sensitive adhesive layer, the relationship between the optical axes of the respective optical elements can be prevented from being lost and the respective optical elements can be prevented from rubbing against each other to damage them when the optical elements are incorporated in a liquid crystaldisplayapparatus. Further,theinterfacereflectionbetween the layers of the respective optical elements is reduced, whereby the contrast ratio in a front direction and an oblique direction can be enhanced when they are used in a liquid crystal display apparatus.

The thickness of the above adhesive layer or pressure-sensitive adhesive layer can be determined appropriately in a suitable range depending upon the use, the adhesive strength, and the like. The preferred thickness range of the adhesive is preferably 0.1 to 50 µm, more preferably 0.1 to 20 µm, and particularly preferably 0.1 to 10 µm. The preferred thickness range of the pressure-sensitive adhesive is preferably 1 to 100 µm, more preferably 5 to 80 µm, and particularly preferably 10 to 50 µm.

As an adhesive orpressure-sensitive adhesive forming the above adhesive layer or pressure-sensitive adhesive layer, any suitable adhesive or pressure-sensitive adhesive can be adopted. Examples of the adhesive include a thermoplastic adhesive, ahot-meltadhesive, a rubber-based adhesive, a thermosetting adhesive, a monomer reactive adhesive, an inorganic adhesive, and a natural adhesive. Examples of the pressure-sensitive adhesive include a solvent-type pressure-sensitive adhesive, a non-aqueous emulsion-type pressure-sensitive adhesive, an aqueous pressure-sensitive adhesive, a hot-melt pressure-sensitive adhesive, a liquid curable pressure-sensitive adhesive, a curable pressure-sensitive adhesive, and a pressure-sensitive adhesive by calendaring.

In the above first optical element **30**, in the case where nx and ny are exactly the same, a retardation value is not caused in a plane, so a slow axis is not detected, and the first optical element **30** can be arranged irrespective of the absorption axis of the first polarizer **21** and the slow axis of the second optical element **40.** Even when nx and ny are substantially the same, in the case where nx and ny are slightly different from each other, a slow axis may bedetected. Inthiscase, preferably, theabovefirstopticalelement **30** is arranged so that the slow axis thereof is substantially parallel or perpendicular to the absorption axis of the first polarizer **21.** As the degree at which the slow axis of the first optical element **30** is not perpendicular or parallel to the absorption axis of the first polarizer **21** increases, a contrast tends to decrease when the first optical element **30** is used in a liquid crystal display apparatus.

### D-3. Configuration of first optical element

The configuration (lamination structure) of the first optical element is not particularly limited, as long as the optical properties described in the above section D-1 are satisfied. Specifically, the first optical element may be a single retardation film, or a laminate composed of two or more retardation films. Preferably, the first optical element is a single retardation film. This is because the shift and unevenness of a retardation value caused by the shrinkage stress of a polarizer and the heat of a backlight are decreased, and the thickness of a liquid crystal panel can be reduced. In the case where the first optical element is a laminate, the first optical element may include an adhesive layer and a pressure-sensitive adhesive layer. In the case where the laminate includes two or more retardation films, these retardation films may or may not be same. Note that the detail of the retardation film will be described later in the section D-4.

The Rth [590] of the retardation film used in the first optical element can be appropriately selected depending upon the number of retardation films to be used. For example, in the case where the first optical element is composed of a single retardation film, it is preferred that the Rth[590] of the retardation film is set to be equal to the Rth[590] of the first optical element. Thus, it is preferred that the retardation values of the pressure-sensitive adhesive layer, the adhesive layer, and the like used in laminating the above first optical element on the first polarizer and the second optical element is as small as possible. Further, in the case where the first optical element is a laminate including two or more retardation films, it is preferred that the total of the Rth [590] of the respective retardation films be designed to be equal to the Rth[590] of the first optical element. Specifically, in the case of producing the first optical element having an Rth[590] of 40 nm by laminating two retardation films, the Rth[590] of the respective retardation films can be set to be 20 nm. Alternatively, the Rth[590] of one retardation film can be set to be 10 nm, and the Rth[590] of the other retardation film can be set tobe 30 nm. In the case of laminating two retardation films, it is preferred to arrange them so that slow axes thereof are perpendicular to eachother. This is because Re [590] can be decreased. In this case, although only the case of two or less retardation films has been illustrated for simplicity, it should be appreciated that the present invention is also applicable to the laminate including three or more retardation films.

The total thickness of the above first optical element is preferably 10 µm to 200 µm, more preferably 20 µm to 120 µm, and much more preferably 30 µm to 60 µm. Setting the above first optical element in the above thickness range can contribute to the reduction in a liquid crystal display apparatus.

### D-4. Retardation film used in first optical element

Although the retardation film used in the first optical element is not particularly limited, a film is preferably used which is excellent in transparency, mechanical strength, thermal stability, moisture blocking property, and the like, and in which optical unevenness is unlikely to occur due to distortion.

The thickness of the above retardation film can be appropriately selected depending upon the purpose. The thickness is preferably 5 µm to 100 µm, more preferably 10 µm to 90 µm, and particularly preferably 15 µm to 60 µm. If the thickness is in the above range, a retardation film which is excellent in mechanical strength and optical uniformity and satisfies the optical properties described in the above section D-1 can be obtained.

An absolute value (C[590] (m²/N)) of aphotoelastic coefficient of the above retardation film is preferably 1 × 10⁻¹² to 200 × 10⁻¹², more preferably 1 × 10⁻¹² to 50 × 0⁻¹², and most preferably 1 × 10⁻¹² to 30 × 10⁻¹². As the absolute value of the photoelastic coefficient is smaller, the shift and unevenness of a retardation value caused by the shrinkage stress of a polarizer and the heat of a backlight are unlikely to occur when the retardation film is used in a liquid crystal display apparatus, and a liquid crystal display apparatus excellent in display uniformity can be obtained.

The transmittance of the above retardation film, measured with light having a wavelength of 590 nm at 23°C, is preferably 80% or more, more preferably 85% or more, and particularly preferably 90% or more. It is preferred that the first optical element also have the similar light transmittance.

The above retardation film is preferably a polymer film containing a thermoplastic resin as a main component. The above thermoplastic resin may be an amorphous polymer or a crystalline polymer. The amorphous polymer has an advantage of being excellent in transparency, and the crystalline polymer has an advantage of being excellent in stiffness, strength, and drug resistance. Further, the polymer film containing the above thermoplastic resin as a main component may or may not be stretched.

Examples of the above thermoplastic resin include: general purpose plastics such as polyethylene, polypropylene, polynorbornene, polyvinyl chloride, a cellulose ester, polystyrene, an ABS resin, an AS resin, polymethyl methacrylate, polyvinyl acetate, and polyvinylidene chloride; general purpose engineering plastics such as polyamide, polyacetal, polycarbonate, modified polyphenylene ether, polybutylene terephthalate, and polyethylene terephthalate; and super engineering plastics such as polyphenylene sulfide, polysulfone, polyethersulfone, polyetheretherketone, polyarylate, a liquid crystalline polymer, polyamideimide, polyimide, and polytetrafluoroethylene. The above thermoplastic resin may be used alone or in combination. Further, the above thermoplastic resin may be used after any suitable polymer modification. Examples of the polymer modification include copolymerization, crosslinking, and modifications in molecular terminals and stereoregularity. A retardation film used in the first optical element is particularly preferably a polymer film containing as a main component a cellulose ester.

Any suitable cellulose ester may be employed as the above cellulose ester. Specific examples thereof include organic acid esters such as cellulose acetate, cellulose propionate, and cellulose butyrate. Further, the above cellulose ester may be a mixed organic acid ester in which hydroxy groups of cellulose are partly substituted with an acetyl group and a propionyl group, for example. The above cellulose ester is produced, for example, through a method described in paragraphs [0040] and [0041] of JP 2001-188128 A.

The above cellulose ester has a weight average molecular weight (Mw) of preferably 20,000 to 300,000, and more preferably 50,000 to 250,000, and particularly preferably 70,000 to 200,000. A weight average molecular weight of the cellulose ester within the above ranges can provide a transparent film having excellent thermal stability and mechanical strength.

Any suitable forming processing may be employed as a method of obtaining the polymer film containing as a main component the above thermoplastic resin. Any suitable method may be selected from compressionmolding, transfermolding, injectionmolding, extrusion molding, blow molding, powder molding, FRP molding, casting method, and the like. Of those, casting method is preferred because a highly smooth retardation film with small Re[590] and favorable optical uniformity (for example, uniformity of retardation value in plane and in the thickness direction) can be obtained. To be specific, the above casting method involves: defoaming a rich solution (dope) prepared by dissolving in a solvent a resin composition containing a thermoplastic resin as main component, a plasticizer, an additive, and the like; uniformly casting the defoamed solution into a sheet on a surface of an endless stainless steel belt or rotating drum; and evaporating the solvent to produce a film.

The conditions to be employed in formation of the polymer film containing as a main component the above thermoplastic resin may appropriately be selected in accordance with the composition or kind of the resin, a forming processing, and the like. In the above casting method, examples of a solvent to be used include cyclopentanone, cyclohexanone, methyl isobutyl ketone, toluene, ethyl acetate, dichloromethane, chloroform, and tetrahydrofuran. By using such solvents, a retardation film having highly optical uniformity can be obtained. Further, a temperature range for drying of the above solvent is preferably 50°C to 250°C, and more preferably 80°C to 150°C. A temperature within the above ranges can provide a retardation film having small Re [590] and highly optical uniformity. Rth[590] may appropriately be adjusted in accordance with drying conditions, a thickness of the film after formation, and the like.

The polymer film containing as a main component the above thermoplastic resin may further contain any suitable additive. Specific examples of the additive include a plasticizer, a thermal stabilizer, a light stabilizer, a lubricant, an antioxidant, a UV absorber, a flame retardant, a colorant, an antistatic agent, a compatibilizing agent, a crosslinking agent, and a thickener. The kind and amount of the additive to be used may be appropriately set in accordance with the purpose. For example, a content of the additive is preferably 10 (weight ratio) or less, more preferably 5 (weight ratio) or less, and most preferably 3 (weight ratio) or less with respect to 100 of a total solid content in the polymer film.

In one embodiment of the present invention, a retardation film used in the above first optical element is a stretched film. For example, the retardation film used in the above first optical element may be formed of a stretched film of the polymer film containing as a main component a thermoplastic resin. In the specification of the present invention, the term "stretched film" refers to a plastic film having enhanced alignment of molecules in a specific direction obtained by: applying tension to an unstretched film at an appropriate temperature; or applying tension to a film stretched in advance.

Any suitable stretching method may be employed as a method of forming the above stretched film. Specific examples of the stretching method include a vertical uniaxial stretching method, a transverse uniaxial stretching method, a vertical and transverse simultaneous biaxial stretching method, and a vertical and transverse sequential biaxial stretching method. Any suitable stretching machine suchas a roll stretchingmachine, atenterstretchingmachine, or a biaxial stretching machine may be used as stretching means. In addition, in the above heat stretching, a stretching temperature may be continuously changed or may be changed in steps. Further, the stretching may be performed in two or more steps.

Moreover, in addition to those described above, a commercially available optical film may be directly used as the polymer film containingasamaincomponenttheabovethermoplasticresin. Further, a commercially available optical film may be subj ected to fabrication such as stretching treatment and/or relaxation treatment before use. Specific examples of a commercially available polymer film containing a cellulose ester as a main component include "FUJITAC series" (TD, UZ, etc., trade name, available from Fuji Photo Film Co., Ltd.).

### E. Second optical element

Referring to FIGS. **1** and **2****,** the second optical element **40** is arranged between the first optical element 30 and the liquid crystal cell **10.**

In the present invention, the above second optical element is used for reducing light leakage in an oblique direction of a liquid crystal panel, in combination with the above first optical element. Generally, in a liquid crystal panel in which two polarizers are arranged on both sides of a liquid crystal cell so that absorption axes are perpendicular to each other, light leakage is unlikely to occur in a front direction. However, light leakage occurs in an oblique direction, and in the case where the absorption axes of the respective polarizers are set to be 0° and 90°, the light leakage amount at an azimuth of 45° in the oblique direction tends to be maximum. By reducing the light leakage amount, the contrast ratio in the oblique direction can be enhanced to decrease a color shift amount in the oblique direction.

### E-1. Optical properties of second optical element

The second optical element used in the present invention exhibits a refractive index ellipsoid of nx > nz > ny.

The in-plane retardation Re [590] of the second optical element used in the present invention at a wavelength of 590 nm and 23°C is preferably 100 nm to 300 nm, more preferably 130 nm to 270 nm, and much more preferably 160 nm to 230 nm. In these ranges, a suitable value can be selected appropriately depending upon the value of Rth[590] of the first optical element described above.

The sum of the Rth[590] of the first optical element and the Rth[590] of the second optical element is preferably [(λ/2) - 100] nm to [(λ/2) + 100] nm, more preferably [(λ/2) - 80] nm to [(λ/2) + 80] nm, and much more preferably [(λ/2) - 50] nm to [(λ/2) + 50] nm. As the sum of the Rth[590] of the first optical element and the Re[590] of the second optical element is closer to (λ/2) nm, light leakage can be decreased.

Generally, the retardation value of the optical element (or the retardation film) may change depending upon the wavelength. This is referred to as the wavelength dispersion properties of the optical element (or the retardation film). In the specification of the present invention, the above wavelength dispersion properties can be obtained by a ratio: Re[480]/Re[590] of retardation values in a plane measured with light having wavelengths of 480 nm and 590 nm at 23°C.

Re[480]/Re[590] of the second optical element used in the present invention is preferably 0.8 to 1.2, more preferably 0.8 to 1.1, and particularly preferably 0.8 to 1.05. As the value is smaller in the above range, the retardation value becomes constant in a wider region of visible light. Therefore, in the case of using the second optical element in a liquid crystal display apparatus, the deviation of a wavelength is unlikely to occur in leaking light, and the color shift amount in an oblique direction of the liquid crystal display apparatus can be further decreased.

The Rth [590] of the second optical element used in the present invention is preferably 30 nm to 130 nm, and more preferably 40 nm to 120 nm in a range satisfying 0 < Rth [590] < Re [590]. The above Rth can be selected appropriately considering the ratio (which is also referred to as anNz coefficient) between the thickness direction retardation value (Rth[590]) and the in-plane retardation value (Re[590]) described later.

In the specification of the present invention, the Rth[590]/Re[590] refers to a ratio (which is also referred to as anNz coefficient) between the thickness direction retardation value Rth[590] and the in-plane retardation value Re[590] measured with light having a wavelength of 590 nm at 23°C.

The Nz coefficient of the above second optical element is preferably 0.05 to 0.45, more preferably 0.1 to 0.4, much more preferably 0.2 to 0.4, and particularly preferably 0.25 to 0.35.

### E-2. Means for arranging second optical element

Referring to FIGS. **1****,** **2A**, and **2B****,** as a method of arranging the above second optical element **40** between the first optical element 30 and the liquid crystal cell **10**, any suitable method can be adopted depending upon the purpose. Preferably, a lyotropic liquid crystal aqueous solution forming the second optical element is applied to the surface of the first optical element (more preferably, the first optical element whose surface is subjected to saponification treatment), whereby the second optical element is formed on the first optical element. Thus, by forming the second optical element by coating, a second optical element with a very small thickness can be obtained.

Preferably, the above second optical element **40** is arranged so that a slow axis thereof is substantially perpendicular to an absorption axis of the first polarizer **21**. As the degree to which the slow axis is not perpendicular to the absorption axis increases, the contrast tends to decrease when the second optical element **40** is used in a liquid crystal display apparatus.

### E-3. Configuration of second optical element

The configuration (lamination structure) of the second optical element is not particularly limited as long as the optical properties described in the above section E-1 are satisfied. Specifically, the second optical element may be a single layer or a plurality of layers. The detail of a material and the like for forming the second optical element will be described later in the section E-4.

The total thickness of the above second optical element is preferably 0.05 to 10 µm, more preferably 0.1 to 5 µm, and much more preferably 0.2 to 3 µm. The second optical element in the present invention is obtained as a layer (coating layer) formed by coating, so the second optical element can have a very small thickness as described above. This can contribute to the thinning of the liquid crystal display apparatus.

### E-4. Material used in second optical element

The second optical element is formed of one or more kinds of polycylic compound having a -SO₃M group and/or a-COOM group (M represents a counter ion). The -SO₃M group represents a sulfonic acid group or a sulfonate group. The -COOM group represents a carboxylic acid group or a carboxylate group.

In the present invention, examples of the M include a hydrogen atom, an alkali metal atom, an alkaline-earth metal atom, a metal ion, or a substituted or unsubstituted ammonium ion. Examples of the above metal ion include Ni²⁺, Fe³⁺, Cu²⁺, Ag⁺, Zn²⁺, Al³⁺, Pd²⁺, Cd²⁺, Sn²⁺, Co²⁺, Mn²⁺, and Ce³⁺.

The above polycyclic compound preferably exhibits a liquid crystal phase in a solution state (i.e., lyotropic liquid crystal). The above liquid crystal phase is preferably a nematic liquid crystal phase in terms of the excellent alignment property.
The above polycyclic compound is preferably an organic compound having two or more aromatic rings and/or heterocycles in a molecular structure, more preferably an organic compound having 3 to 8 aromatic rings and/or heterocycles in a molecular structure, and much more preferably an organic compound having 4 to 6 aromatic rings and/or heterocycles in a molecular structure. Particularly preferably, the above polycylic compound necessarily contains heterocycles in a molecular structure. Further, as a heteroatom in the heterocycle, any suitable heteroatom can be selected. The heteroatom is preferably a nitrogen atom.

The above polycyclic compound is preferably a compound represented by General Formula (1). 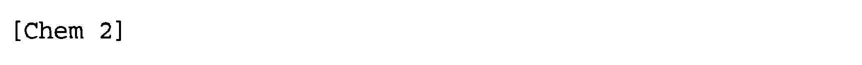 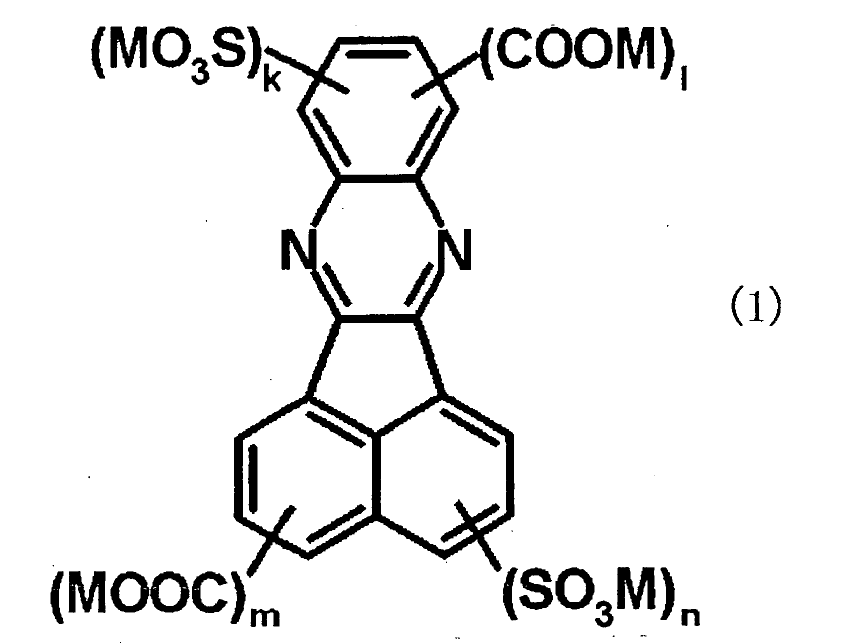 (in General Formula (1) , M represents a counter ion, k and 1 respectively represent integers of 0 to 4 independently, the sum of k and 1 is an integer of 0 to 4, m and n respectively represent integers of 0 to 6 independently, the sum of m and n is an integer of 0 to 6, and k, 1, m and n do not represent 0 at the same time.)

In the present invention, the polycyclic compound represented by General Formula (1) is preferably k = 0, 1 = 0, m = 0, and n = 1 to 2. Specifically, acenaphtho[1,2-b]quinoxaline-2-sulfonic acid, and acenaphtho[1,2-b]quinoxaline-2,5-disulfonic acid are preferred.

In order to obtain the second optical element in the present invention, preferably, a lyotropic liquid crystal aqueous solution containing both acenaphtho[1,2-b]quinoxaline-2-sulfonic acid, and acenaphtho [1,2-b] quinoxaline-2,5-disulfonic acid is applied to the surface of the first optical element (more preferably, the first optical element whose surface is subjected to saponification treatment) to form the second optical element.

Acenaphtho[1,2-b]quinoxaline derivative represented by General Formula (1) can be obtained by sulfonating an acenaphtho[1,2-b]quinoxaline compound with sulfuric acid, fuming sulfuric acid, or chlorosulfonic acid, as represented by General Formula (2). 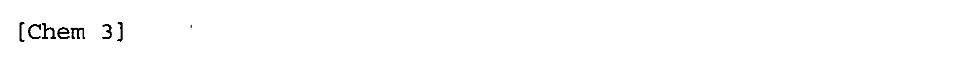 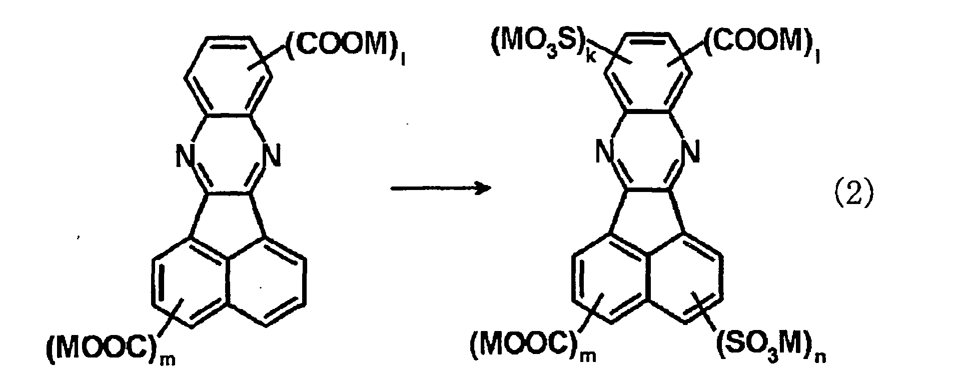 (in General Formula (2), Mrepresentsacounterion, kandlrespectively represent integers of 0 to 4 independently, the sum of k and 1 is an integer of 0 to 4, m and n respectively represent integers of 0 to 6 independently, the sum of m and n is an integer of 0 to 6, and k, 1, m and n do not represent 0 at the same time.)

The acenaphtho[1,2-b]quinoxaline derivative represented by General Formula (1) can also be obtained by the condensation reaction between a benzene-1,2-diamine compound and an acenaphthoquinone compound, as represented by General Formula (3). 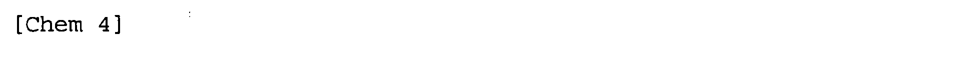 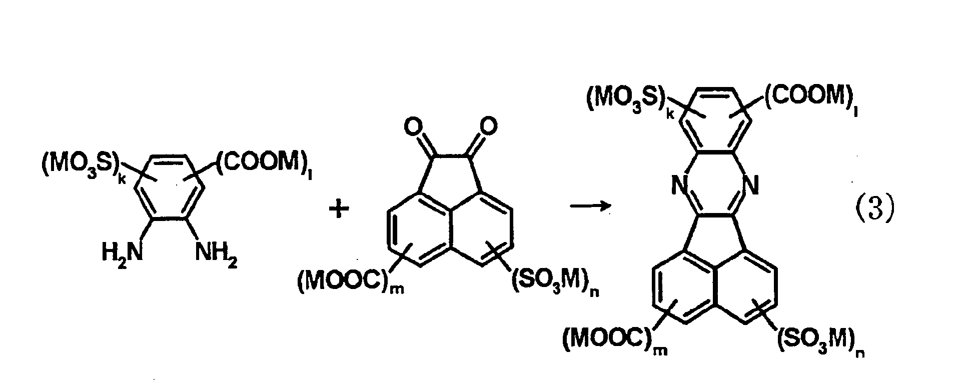 (in General Formula (3) , Mrepresentsacounterion, kandlrespectively represent integers of 0 to 4 independently, the sum of k and 1 is an integer of 0 to 4, m and n respectively represent integers of 0 to 6 independently, the sum of m and n is an integer of 0 to 6, and k, 1, m and n do not represent 0 at the same time.)

### E-5. Formation of second optical element

The second optical element of the present invention can be formed by any suitable method. Preferably, the second optical element is produced by a method including the following steps (1) to (3) .
(1) The step of preparing a solution exhibiting a nematic liquid crystal phase, containing one or more kinds of polycyclic compound having a -SO₃M group and/or a -COOM group (M represents a counter ion) and a solvent.
(2) The step of preparing a base material at least one surface of which is hydrophilized.
(3) The step of applying the solution prepared in the above step (1) onto the surface, which is hydrophilized, of the base material prepared in the above step (2), followed by drying.
   According to the above method, a lamination film including at least the second optical element and the base material can be obtained. In the present invention, the first optical element may correspond to the above base material.

In the above step (1), the above solution is prepared, preferably, by dissolving two or more kinds of polycylic compounds having different substitution positions of a -SO₃M group and/or a -COOM group in a solvent. The number of kinds of the polycyclic compounds contained in the above solution is preferably 2 or more, more preferably 2 to 6, and particularly preferably 2 to 4, excluding a trance amount of compounds contained as impurities.

The above solvent is used for dissolving the above polycyclic compounds to allow a nematic liquid crystal phase to be expressed. As the above solvent, any suitable one can be selected. The above solvent may be, for example, an inorganic solvent such as water, or an organic solvent such as alcohols, ketones, ethers, esters, aliphatic and aromatic hydrocarbons, halogenated hydrocarbons, amides, and cellosolves. Examples of the above solvent include: n-butanol, 2-butanol, cyclohexanol, isopropyl alcohol, t-butyl alcohol, glycerine, ethylene glycol, acetone, methyl ethyl ketone, methyl isobutyl ketone, cyclohexanone, cyclopentanone, 2-pentanone, 2-hexanone, diethyl ether, tetrahydrofuran, dioxane, anisole, ethyl acetate, butyl acetate, methyl lactate, n-hexane, benzene, toluene, xylene, chloroform, dichloromethane, dichloroethane, dimethylformamide, dimethylacetamide, methyl cellosolve, ethyl cellosolve. These solvents may be used alone or as a mixture.

The above solvent is preferably water. The electrical conductivity of the above water is preferably 20 µS/cm or less, more preferably 0.001 µS/cm to 10 µS/cm, and particularly preferably 0.01 µS/cm to 5 µS/cm. The lower limit value of the electrical conductivity of the above water is 0 µS/cm. By setting the electrical conductivity of the water in the above range, a second optical element having a high in-plane birefringent index can be obtained.

The concentration of a polycyclic compound in the above solution can be appropriately prepared in a range exhibiting a nematic liquid crystal phase, depending upon the kind of a polycyclic compound to be used. The concentration of the polycyclic compound in the above solution is preferably 5% by weight to 40% by weight, more preferably 5% by weight to 35% by weight, and much more preferably 5% by weight to 30% by weight. By setting the concentration of the solution in the above range, the solution can form a stable liquid crystal state. The above nematic liquid crystal phase can be checked and identified based on the optical pattern of a liquid crystal phase observed with a polarization microscope.

The above solution can further contain any suitable additive. Examples of the above additive include a surfactant, a plasticizer, a thermal stabilizer, a light stabilizer, a lubricant, an antioxidant, a UV-absorber, a fire retardant, a colorant, an antistatic agent, a compatibilizing agent, a cross-linking agent, and a thickener. The adding amount of the above additive is preferably more than 0 and 10 or less parts by weight with respect to 100 parts by weight of the solution.

The above solution can further contain a surfactant. The surfactant is used for enhancing the wettability and application property of a polycylic compound with respect to the surface of a base material. The above surfactant is preferably a nonionic surfactant. The adding amount of the above surfactant is preferably more than 0 and 5 or less parts by weight with respect to 100 parts by weight of the solution.

The term "hydrophilization treatment" in the above step (2) refers to the treatment of decreasing the contact angle of water with respect to a base material. The above hydrophilization treatment is used for enhancing the wettability and application property of the surface of a base material to which a polycyclic compound is to be applied. The above hydrophilization treatment is the treatment of decreasing the contact angle of water at 23°C with respect to a base material by preferably 10% or more, more preferably 15% to 80%, and much more preferably 20% to 70%, compared with that before the treatment. The decrease ratio (%) is obtained by an expression: {(Contact angle before treatment - Contact angle after treatment)/Contact angle before treatment} × 100.

The above hydrophilization treatment is the treatment of decreasing the contact angle of water at 23°C with respect to a base material by preferably 5° or more, more preferably 10° to 65°, and much more preferably 20° to 65°, compared with that before the treatment.

The above hydrophilization treatment is the treatment of setting the contact angle of water at 23°C with respect to a base material to preferably 5° to 60°, more preferably 5° to 50°, and much more preferably 5° to 45°. By setting the contact angle of water with respect to a base material in the above range, a second optical element exhibiting a high in-plane birefringent index and having a small variation in thickness can be obtained.

As the above hydrophilization treatment, any suitable method can be adopted. The above hydrophilization treatment may be, for example,adrytreatmentorwettreatment. Examplesofthedrytreatment include: a discharge treatment such as a corona treatment, a plasma treatment, and a glow discharge treatment; and an ionization actinic rays treatment such as a frame treatment, an ozone treatment, a UV-ozone treatment, aUV-treatment, andanelectronic line treatment. Examples of the wet treatment include an ultrasonic treatment using a solvent such as water or acetone, an alkali treatment, and an anchor coat treatment. These treatments may be used alone or in combination.

Preferably, the above hydrophilization treatment is a corona treatment, a plasma treatment, an alkali treatment, or an anchor coat treatment. With the above hydrophilization treatment, a second optical element having high alignment property and small variation in thickness can be obtained. The conditions of the above hydrophilization treatment, such as a treatment time and intensity, can be appropriately and suitably adjusted so that the contact angle of water with respect to a base material is in the above range.

The above corona treatment is typically a treatment of reforming the surface of a base material by allowing the base material to pass through a corona discharge generated by applying a high frequency and high voltage between a grounded dielectric roll and an insulated electrode to subject air therebetween to dielectric breakdown so that a irisionized. The above plasma treatment is typically a treatment of reforming the surface of a base material by allowing the base material to pass through a low-temperature plasma generated when a glow discharge occurs in inorganic gas such as low-pressure inactive gas, oxygen, or halogen gas, and a part of gas molecules are ionized. The above ultrasonic cleaning treatment is typically a treatment of improving the wett ability of a base material by removing a contaminant on the surface of a base material by immersing the base material in water or an organic solvent and applying an ultrasonic wave to the base material. The above alkali treatment is typically a treatment of reforming the surface of a base material by immersing the base material in an alkali treatment solution in which a basic material is dissolved in water or an organic solvent. The above anchor coat treatment is typically a treatment of applying an anchor coat agent to the surface of a base material.

The base material used in the present invention is used for uniformly flow-casting a solution containing the above polycylic compound and solvent. As the above base material, any suitable one can be selected. In the present invention, the first optical element preferably can correspond to the above base material.

The application speed of the solution in the above step (3) is preferably 50 mm/second or more, and more preferably 100 mm/second or more. By setting the application speed in the above range, a shear force suitable for aligning a polycyclic compound is applied to the solution used in the present invention, and a second optical element having a high in-plane birefringent index and a small variation in thickness can be obtained.

As a method of applying the above solution on the base material surface, any suitable application method employing a coater may be adopted. Examples of the above coater include a bar coater, a reverse roll coater, a positive rotation roll coater, a gravure coater, a knife coater, a rod coater, a slot die coater, a slot orifice coater, a curtain coater, a fountain coater, an air doctor coater, a kiss coater, a dip coater, a bead coater, a blade coater, a cast coater, a spray coater, a spin coater, an extrusion coater, and a hot melt coater. Of those, preferred examples of the coater used in the present invention include a bar coater, a reverse roll coater, a positive rotation roll coater, a gravure coater, a rod coater, a slot die coater, a slot orifice coater, a curtain coater, and a fountain coater. An application method employing the above coater can provide a very thin second optical element having a small variation in thickness.

Any suitable method may be adopted as the method of drying the above solution. Examples of the drying methods include: drying means such as an air-circulating thermostatic oven in which hot air or cool air circulates; a heater using microwaves, far infrared rays, or the like; a heated roller for temperature adjustment; a heat pipe roller; and a heated metal belt.

It is preferred that the temperature for drying the above solution be an isotropic phase transition temperature or lower of the above solution, and the solution is dried by raising the temperature from a low temperature to a high temperature gradually. The above drying temperature is preferably 10°C to 80°C, and more preferably 20°C to 60°C. If the drying temperature is in the above temperature range, a second optical element having a small variation in thickness can be obtained.

The time for drying the above solution may be appropriately selected depending upon the drying temperature and the kind of a solvent. In order to obtain a birefringent film having a small variation in thickness, the time for drying the above solution is preferably 1 minute to 30 minutes, and more preferably 1 mitute to 10 minutes.

The second optical element of the present invention may be produced by further performing the following step (4) after the above steps (1) to (3).
(4) The step of bringing a solution containing at least one kindof compound salt selected from the group consisting of an aluminum salt, a barium salt, a lead salt, a chromium salt, a strontium salt, and a compound salt having two or more amino groups in molecules into contact with the film obtained in the above step (3).

In the present invention, the above step (4) is used for insolubilizing the second optical element or rendering it hardly soluble with respect to water. Examples of the above compound salt include aluminum chloride, barium chloride, lead chloride, chromium chloride, strontium chloride, 4,4'-tetramethyldiaminodiphenylmethane hydrochloride, 2,2'-dipyridyl hydrochloride, 4,4'-dipyridyl hydrochloride, melamine hydrochloride, and tetraaminopyrimidine hydrochloride. With such a compound salt, a second optical element excellent in water resistance can be obtained.

The compound salt concentration of a solution containing the above compound salt is preferably 3% by weight to 40% by weight, and more preferably 5% by weight to 30% by weight. By bringing the second optical element into contact with a solution containing a compound salt with a concentration in the above range, the second optical element excellent in durability can be obtained.

As a method of bringing the second optical element obtained in the above step (3) into contact with a solution containing the above compound salt, for example, any method can be adopted, such as a method of applying a solution containing the above compound salt to the surface of the second optical element and a method of immersing the second optical element in a solution containing the above compound salt. In the case where these methods are adopted, it is preferred that the obtained second optical element be washed with water or any solvent, and the resultant optical element is further dried, whereby a laminate excellent in adhesiveness of the interface between the base material and the second optical element can be obtained.

### F. Third optical element

In the liquid crystal panel of the present invention, a third optical element having substantially optical isotropymaybe arranged between the second polarizer and the liquid crystal cell. Thus, if the third optical element is arranged, the third optical element functions as a protective layer of the polarizer on the cell side, which prevents the degradation of the polarizer, and consequently, the display characteristics of the liquid crystal display apparatus can be kept high for a long period of time. In the specification of the present invention, the phrase "having substantially optical isotropy" refers to the case where refractive index profile satisfies nx = ny = nz, assuming that in-plane principal refractive indices are nx and ny, and a thickness direction refractive index is nz. Note that the present specification includes not only the case where nx, ny, and nz are each exactly the same, but also the case where they are substantially the same (nx ≈ ny ≈ nz). Here, the phrase "the case where nx, ny, and nz are substantially the same" includes, for example, the case where an in-plane retardation value (Re [590]) is 10 nm or less and an absolute value of a thickness direction retardation value (Rth[590]) is 10 nm or less.

In the case where the liquid crystal panel of the present invention includes the above third optical element, the third optical element is used for eliminating the adverse influence exerted on the display characteristics of the liquid crystal display apparatus. Generally, a liquid crystal layer(consequently, a liquid crystal cell) containing liquid crystal molecules aligned homogeneously has a retardation comparable to the product of a cell gap and a birefringent index of a liquid crystal layer. The retardation of the liquid crystal layer may synergistically function with the retardation of the third optical element to adversely influence the display characteristics of the liquid crystal display apparatus greatly. Specifically, in the case where the absolute value of the thickness direction retardation value of the above third optical element exceeds 10 nm, the light leakage of the liquid crystal display apparatus occurs, the contrast ratio in an oblique direction decreases, and the color shift amount in the oblique direction tends to increase. Bydecreasingthein-plane and thickness direction retardation values of the third optical element, the adverse influence exerted on the display characteristics of the liquid crystal display apparatus by the retardation of the above liquid crystal layer can be eliminated. Consequently, the optical compensation obtained by the combination of the first optical element and the second optical element is exhibited sufficiently, and a liquid crystal display apparatus having satisfactory display characteristics can be obtained.

### F-1. Optical properties of third optical element

The Re[590] of the third optical element that can be used in the present invention is preferably as small as possible. The Re [590] is preferably 5 nm or less, and more preferably 3 nm or less. If the Re [590] is in the above range, the contrast ratio in the oblique direction of the liquid crystal display apparatus is enhanced, and the color shift amount in the oblique direction can be decreased.

The Rth [590] of the above third optical element is also preferably as small as possible. The absolute value of the Rth [590] is preferably 7 nm or less and more preferably 5 nm or less. By setting the absolute value of the Rth[590] in the above range, the adverse influence caused by Rth, exerted on the display characteristics of the liquid crystal display apparatus, can be eliminated, and the contrast ratio in the oblique direction of the liquid crystal display apparatus is enhanced and the color shift amount in the oblique direction can be decreased.

### F-2. Means for arranging third optical element

As a method of arranging a third optical element between the liquid crystal cell and the second polarizer, any suitable method can be adopted depending upon the purpose. Preferably, adhesive layers orpressure-sensitive adhesive layers (not shown) are provided on both sides of the above third optical element, and the third optical element is attached to the liquid crystal cell and the second polarizer. By filling the gap between the respective optical elements with an adhesive layer or a pressure-sensitive adhesive layer, the relationship between the optical axes of the respective optical elements can be prevented from being lost and the respective optical elements can be prevented from rubbing against each other to damage them when the optical elements are incorporated in a liquid crystal display apparatus. Further, the interface reflection between the layers of the respective optical elements is reduced, whereby the contrast ratio in a front direction and an oblique direction can be enhanced when they are used in a liquid crystal display apparatus.

As the thickness of the above adhesive layer or pressure-sensitive adhesive layer, and the kind of the adhesive or pressure-sensitive adhesive forming the adhesive layer or pressure-sensitive adhesive layer, those which are in the same range as those described in the above section D-2 can be adopted.

In the above third optical element, in the case where nx and ny are exactly the same, a retardation value is not caused in a plane, so a slow axis is not detected, and the third optical element can be arranged irrespective of the absorption axis of the second polarizer. Even when nx and ny are substantially the same, in the case where nx and ny are slightly different from each other, a slow axis may be detected. In this case, preferably, the above third optical element is arranged so that the slow axis thereof is substantially parallel or perpendicular to the absorption axis of the second polarizer. As the degree at which the slow axis of the third optical element is not perpendicular or parallel to the absorption axis of the second polarizer increases, a contrast tends to decrease when the third optical element is used in a liquid crystal display apparatus.

### F-3. Configuration of third optical element

The configuration (lamination structure) of the third optical element is not particularly limited, as long as the optical properties described in the above section F-1 are satisfied. The above third optical element may be a single optical film, or a laminate composed of two or more optical films. In the case where the third optical element is a laminate, the third optical element may include an adhesive layer or a pressure-sensitive adhesive layer for attaching the above optical film. As long as the third optical element has substantially optical isotropy, the above optical film may be an isotropic film or a retardation film. For example, in the case where two retardation films are laminated, the respective retardation films are preferably arranged so that slow axes thereof are perpendicular to each other. Due to such arrangement, an in-plane retardation value can be decreased. Further, it is preferred that, as the respective retardation films, films having positive and negative thickness direction retardation values be laminated. Due to such lamination, the thickness direction retardation value can be decreased.

The total thickness of the above third optical element is preferably 20 µm to 500 µm, more preferably 20 µm to 400 µm, and much more preferably 20 µm to 200 µm. Setting the total thickness in the above range can contribute to the reduction in thickness of the liquid crystal display apparatus.

### F-4. Optical film used in third optical element

An optical film used in a third optical element is preferably an isotropic film. In the specification of the present invention, the term "isotropic film" refers to a film having a small optical difference in a three-dimensional direction, and exhibiting substantially no an isotropic optical properties such as birefringence. Note that the phrase "exhibiting substantially no an isotropic optical properties" refers to that the case where the display characteristics of the liquid crystal display apparatus is not adversely influenced practically even though birefringence occurs slightly is included in the isotropic case. The isotropic film used in the third optical element is not particularly limited, and a film is preferably used which is excellent in transparency, mechanical strength, thermal stability, moisture blocking property, and the like, and in which optical unevenness is unlikely to be caused by distortion.

The thickness of the above isotropic film can be appropriately selected depending upon the purpose and the lamination structure of the third optical element. The thickness of the above isotropic film is preferably 20 µm to 200 µm, more preferably 20 µm to 180 µm, and much more preferably 20 µm to 150 µm. If the thickness of the above isotropic film is in the above range, an optical film being excellent in mechanical strength and optical uniformity and satisfying the optical properties described in the above section F-1 can be obtained.

The absolute value (C[590](m²/N)) of the photoelastic coefficient of the above isotropic film is preferably 1 × 10⁻¹² to 100 × 10⁻¹², more preferably 1 × 10⁻¹² to 50 × 10⁻¹², much more preferably 1 × 10⁻¹² to 30 × 10⁻¹², and particularly preferably 1 × 10⁻¹² to 8 × 10⁻¹². As the absolute value of the photoelastic coefficient is smaller, when the isotropic film is used in a liquid crystal display apparatus, the displacement and unevenness of retardation values caused by the shrinkage stress of a polarizer and the heat of a backlight are unlikely to occur, whereby a liquid crystal display apparatus excellent in display uniformity can be obtained.

The transmittance of the above isotropic film measured with light having a wavelength of 590 nm at 23°C is preferably 80% or more, more preferably 85% or more, and much more preferably 90% or more. It is preferred that the third optical element have a light transmittance similar to the above.

The above isotropic film is preferably a stretched film of a polymer film containing a thermoplastic resin as a main component. As the above thermoplastic polymer, for example, any suitable polymer such as those described in the above section D-4 can be selected. The isotropic film used in the third optical element is more preferably a polymer film containing, as a main component, at least one resin selected from a cellulose ester, a cycloolefin-based resin obtained by hydrogenating a ring-opening polymer of a norbornene-based monomer, an addition copolymer of a norbornene-based monomer and an α-olefin monomer, and an addition copolymer of a maleimide-based monomer and an olefin monomer.

As the above cellulose ester, any suitable cellulose ester can be adopted. Specific examples there of include organic acid esters such as cellulose acetate, cellulose propionate, and cellulose butyrate. Further, the above cellulose ester may be a mixed organic acid ester in which hydroxy groups of cellulose are partly substituted with an acetyl group and a propionyl group, for example. A polymer film whose Re [590] and Rth [590] are both small, containing the above cellulose ester as a main component, is preferably formed by casting method, and the Re [590] and the Rth [590] can be appropriately adjusted by the forming conditions, the film thickness, and the like. The film can be obtained by, for example, the method described in Example 1 of JP 7-112446 A. Further, the film can also be obtained with the Rth [590] before treatment decreased by swelling a commercially available film with a ketone-based solvent such as cyclopentanone, followed by drying.

As the above cycloolefin-basedresinobtainedbyhydrogenating a ring-opening polymer of a norbornene-based monomer, any suitable resin can be adopted. Examples of a polymer film containing, as a main component, the cycloolefin-based resin obtained by hydrogenating a ring-opening polymer of a norbornene-based monomer include "ZEONEX series" (480, 480R, etc.) (trade name) manufactured by Nippon Zeon Co., Ltd., "Zeonor series" (ZF14, ZF16, etc.) (trade name) manufactured by Nippon Zeon Co., Ltd. , and "Artonseries" (ARTON G, ARTON F, etc.) (trade name) manufactured by JSR Corporation. A polymer film whose Re [590] and Rth [590] are both small, containing, as a main component, the above cycloolefin-based resin obtained by hydrogenating a ring-opening polymer of a norbornene-based monomer is preferably formed by extrusion, and the Re [590] and the Rth [590] can be appropriately adjusted by the forming conditions, the film thickness, and the like. Specifically, the film can be obtained by, for example, the method described in Example 1 of JP 4-301415 A.

The above addition copolymer of a norbornene-based monomer and α-olefin monomer can be obtained by, for example, the method described in Example 1 of JP 61-292601 A.

As the above isotropic polymer, in addition to the materials described above, there are given a polycarbonate-based resin having 9,9-bis(4-hydroxyphenyl)fluorene at a side chain described in JP 2001-253960 A, a random copolymer of a monomer constituting a polymer that exhibits positive alignment birefringence and a monomer constituting a polymer that exhibits negative alignment birefringence described on pages 194 to 207 of "Development and Application Technique of Optical Polymer Material" 2003, published by NTS Inc., and a polymer doped with an anisotropic low molecule or birefringent crystal.

### G. Liquid crystal display apparatus

The liquid crystal panel of the present invention may be used for: a liquid crystal display apparatus such as a personal computer, a liquid crystal television, a cellular phone, or a personal digital assistance (PDA) ; or an image display apparatus such as an organic electroluminescence display (organic EL), a projector, a projection television, oraplasmatelevision. Inparticular,theliquidcrystal panel of the present invention is preferably used for a liquid crystal display apparatus, and particularly preferably used for a liquid crystal television.

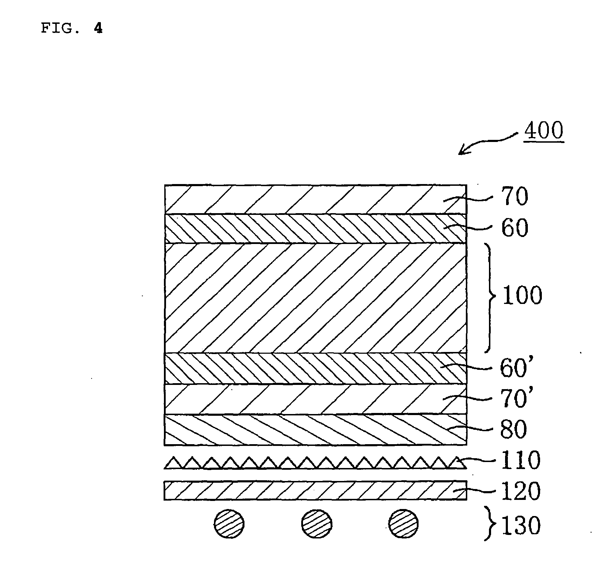

Fig. 4 is a schematic sectional view of a liquid crystal display apparatus according to a preferred embodiment of the present invention. A liquid crystal display apparatus 400 is provided with: a liquid crystal panel 100 of the present invention; protective layers 60 and 60' arranged on both sides of the liquid crystal panel 100; surface treated layers 70 and 70' arranged on outer sides of the protective layers 60 and 60'; a brightness enhancement film 80, a prism sheet 110, a light guide plate 120, and a lamp 130 arranged on an outer side (backlight side) of the surface treated layer 70'. Treated layers subjected to hard coat treatment, antireflection treatment, anti-sticking treatment, diffusion treatment (also referred to as anti-glare treatment), or the like are used as the above surface treated layers 70 and 70'. Further, a polarization separation film having a polarization selection layer "D-BEF series" (trade name, available from Sumitomo 3M Limited, for example) or the like is used as the above brightness enhancement film 80. Those optical members are used, to thereby obtain a display apparatus with better display characteristics. Further, according to another embodiment, the optical members shown in Fig. 4 may be partly omitted or replaced by other members in accordance with the drive mode or application of the liquid crystal cell to be used as long as the effects of the present invention are obtained.

### H. Intended use of liquid crystal panel of the present invention

The intended use of the liquid crystal panel and liquid crystal display apparatus of the present invention is not particularly limited, but the liquid crystal panel and the liquid crystal display apparatus of the present invention may be used for various purposes such as: office automation (OA) devices such as a personal computer monitor, a laptop personal computer, and a copying machine; portable devices such as a cellular phone, a watch, a digital camera, a personal digital assistance (PDA), and a portable game machine; domestic electric appliances such as a video camera, a liquid crystal television, andamicrowave; in-cardevicessuchasabackmonitor, acarnavigation system monitor, and a car audio; display devices such as a commercial information monitor; security devices such as a surveillance monitor; and nursing care/medical devices such as a nursing monitor and a medical monitor.

### Examples

The present invention will be described in more detail by using the following examples and comparative examples. Note that the present invention is not limited to the following examples. Note that analysis methods used in the examples are described below.
(1) Method of measuring a single axis transmittance and a polarization degree of a polarizer:
   The single axis transmittance and the polarization degree were measured at 23°C by using a spectrophotometer "DOT-3" (trade name, manufactured by Murakami Color Research Laboratory Co.,Ltd.).
(2) Method of calculating thickness:
   In a case where the thickness was less than 10 µm, the thickness was measured by using a spectrophotometer for thin film "Multi Channel Photo Detector MCPD-2000" (trade name, manufactured by Otsuka Electronics Co., Ltd.). In a case where the thickness was 10 µm or more, the thickness was measured by using a digital micrometer "KC-351C-type" (trade name, manufactured by Anritsu Corporation).
(3) Method of measuring retardation value (Re, Rth):
   Retardation values were measured with light having a wavelength of 590 nm at 23°C, using a retardation meter "KOBRA21-ADH" (trade name, manufactured by Oji Scientific Instruments) with parallel Nicolsasaprinciple. Note that,regarding the wavelength dispersion measurement, light having a wavelength of 480 nm was also used.
(4) Method of measuring the contact angle of water:
   Liquid was dropped onto a base material, and the contact angle of water with respect to the base material after an elapse of 5 seconds was measured with a solid-liquid interface analyzer "Drop Master 300" (trade name, manufactured by Kyowa Interface Science Co., Ltd.). The measurement condition was a static contact angle measurement. As water, ultra-pure water was used, and the amount of liquid droplets was set to be 0.5 µl. An average of 10 repeated measurements was determined as a measurement value for each base material.
(5) Method of measuring electric conductivity:
   After an electrode of a solution conductivity meter "CM-117" (trade name, manufactured by Kyoto Electronics Manufacturing Co. , Ltd.) was washed with an aqueous solution prepared so as to have a concentration of 0.05% by weight, a container of 1 cm³ connected to the electrode was filled with a sample and a displayed electric conductivity that became constant was determined to be a measured value.
(6) Measurement of color shift
   The color tone of a liquid crystal display apparatus was measured by changing the polar angle from 0° to 80° in a direction of an azimuth angle of 45°, using "EZ Contrast 160D" (trade name, manufactured by ELDIM SA), and plotted on an XY chromaticity diagram. Further, the color tone of the liquid crystal display apparatus was measured by changing an azimuth angle from 0° to 360° in a direction of a polar angle of 60°.
(7) Measurement of contrast
   A white image and a black image were displayed on the liquid crystal display apparatus, and measured by "EZ Contrast 160D" (trade name, manufactured by ELDIM SA).

### [Reference Example 1]: Production of polarizer

A polymer film "9P75R" (trade name, thickness: 75 µm, average polymerization degree: 2,400, saponification degree: 99.9 mol%, manufactured by Kuraray Co., Ltd.) containing polyvinyl alcohol as a main component was uniaxially stretched 2.5 times by using a roll stretching machine while the polymer film was colored in a coloring bath maintained at 30°C±3°C and containing iodine and potassium iodide. Next, the polymer film was uniaxially stretched to a 6 times length of the original length of the polyvinyl alcohol film in an aqueous solution maintained at 60°C±3°C and containing boric acid and potassium iodide while a cross-linking reaction was performed. The obtained film was dried in an air circulating thermostatic oven at 50°C±1°C for 30 minutes, to thereby obtain polarizers P1 and P2 with a moisture content of 26%, a thickness of 28µm, a polarization degree of 99.9%, and a single axis transmittance of 43.5%.

### [Reference Example 2]: Production of polarizer protective film

A triacetyl cellulose film "FUJITACUZ"(trade name, thickness: 80 µm, manufactured by Fuji Photo Film Co., Ltd.) was used as a polarizer protective film.

### [Reference Example 3]: Production of first optical element

A triacetylcellulose film "ZRF80S" (trade name, thickness: 80 µm, manufactured by Fuji Photo Film Co., Ltd.) was immersed in an aqueous solution in which sodium hydroxide was dissolved, and the surface of the film was subjected to an alkali treatment (saponification treatment) . The contact angle of water at 23°C with respect to the film after the alkali treatment was 42.2° (64.6° before the treatment).

### [Reference Example 4]: Synthesis of acenaphtho[1,2-b]quinoxaline (QAN)

To a reaction container equipped with a stirrer, 5 L of glacial acetic acid and 490 g of purified acenaphthenequinone were loaded, followed by stirring under nitrogen bubbling for 15 minutes, whereby an acenaphthenequinone solution was obtained. Similarly, toanother reaction container equipped with a stirrer, 7.5 L of glacial acetic acid and 275 g of o-phenylenediamine were loaded, followed by stirring under nitrogen bubbling for 15 minutes, where by an o-phenylene diamine solution was obtained. After that, the o-phenylenediamine solution was gradually added to the acenaphthenequinone solution over 1 hour while stirring under a nitrogen atmosphere, and thereafter, they were allowed to react with each other by further continuing stirring for 3 hours. Ion exchange water was added to the obtained reaction solution, and a precipitate was filtered to obtain a crude product. The crude product was recrystallized with heated glacial acetic acid to obtain purified QAN.

### [Reference Example 5]: Synthesis of acenaphtho[1,2-b]quinoxaline-2-sulfonic acid(2-sulfo-QAN)

300 g of the QAN obtained in Reference Example 4 was added to 2.1 L of 30% fuming sulfuric acid, stirred at room temperature for 48 hours, whereby the mixture was allowed to react. While the obtained solution was kept at 40°C to 50°C, 4.5 L of ion exchange water was added to the solution to dilute, and stirred for further 3 hours. A precipitate was filtered to obtain 2-sulfo-QAN.
The reaction path is shown in Formula (4).

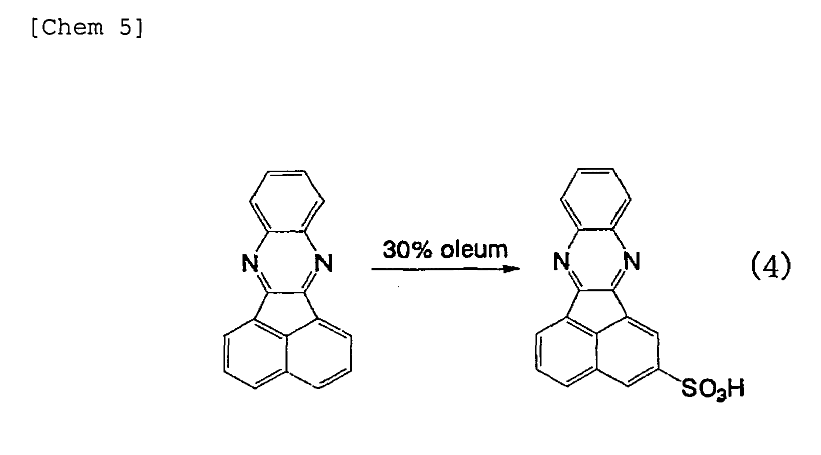

### [Reference Example 6] : Synthesis of acenaphtho[1,2-b]quinoxaline-2,5-disulfonic acid(2,5-sulfo-QAN)

300 g of the QAN obtained in Reference Example 4 was added to 2.1 L of 30% fuming sulfuric acid, stirred at room temperature for 24 hours, heated to 125°C, and stirred for 32 hours, whereby the mixture was allowed to react. While the obtained solution was kept at 40°C to 50°C, 4.5 L of ion exchange water was added to the solution to dilute, and stirred for further 3 hours. A precipitate was filtered and recrystallized with sulfuric acid to obtain 2,5-sulfo-QAN.
The reaction path is shown in Formula (5).

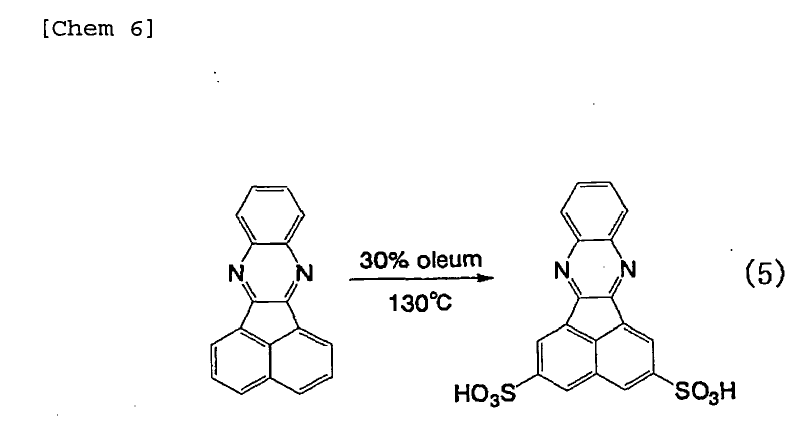

### [Reference Example7]: Preparation of lyotropic liquid crystal aqueous solution

2-sulfo-QAN obtained in Reference Example 5 and 2,5-sulfo-QAN obtained in Reference Example 6 were dissolved in 30 L of ion exchange water (electric conductivity: 0.1 µS/cm), and a sodium hydroxide aqueous solution was added to the solution to neutralize it. The obtained aqueous solution was arranged in a supply tank and circulation-filtered while reverse osmosis water was being added so as to obtain a constant liquid amount, using a high-pressure RO element test apparatus equipped with a reverse osmosis membrane filter "NTR-7430 filter element" (trade name, manufactured by Nitto Denko Corporation), and remaining sulfuric acid was removed until the electric conductivity of waste liquid reached 10 µS/cm. Next, this aqueous solution was adjusted so that the concentration of a polycylic compound in an aqueous solution became 23% by weight, using a rotary evaporator. When the aqueous solution thus obtained was observed with a polarizationmicroscope, it exhibited a lyotropic liquid crystal phase at 23°C. When the composition ratio between the sodium salt of 2-sulfo-QAN and the sodium salt of 2, 5-sulfo-QAN in the aqueous solution was quantified by liquid chromatographic analysis, the composition ratio of the sodium salt of 2-sulfo-QAN and the sodium salt of 2,5-sulfo-QAN was 45 : 55.
The reaction path is shown in Formulae (6) and (7).

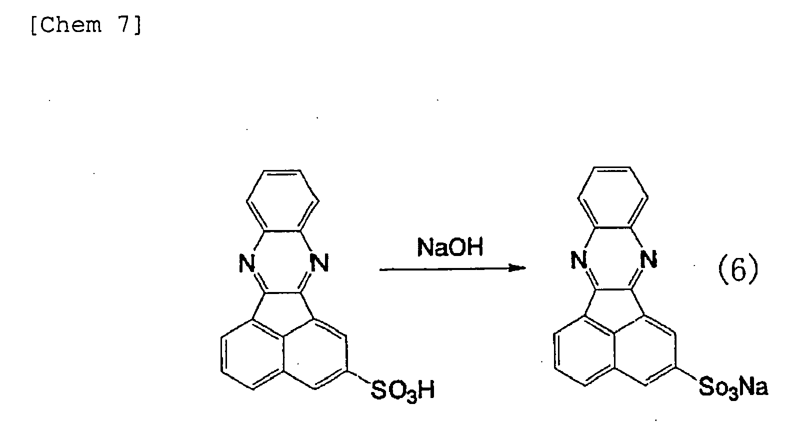

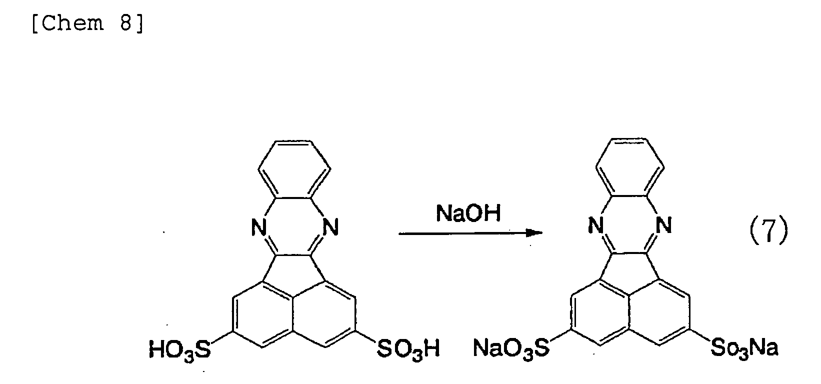

### [Reference Example 8]: Production of third optical element

A commercially available polymer film "ZRF80S" (trade name, manufactured by Fuji Photo Film Co., Ltd.) containing a cellulose ester as a main component was used as a third optical element. Re [590] of the third optical element was 0 nm, and Rth[590] thereof was 1 nm.

[Reference Example 9]: Production of liquid crystal cell of IPS mode
A liquid crystal panel was taken out from a liquid crystal display apparatus [KLV-17HR2 manufactured by Sony Corporation] including a liquid crystal cell of an IPS mode, polarizing plates arranged on upper and lower sides of the liquid crystal cell were removed, and glass (front and back) surfaces of the above liquid crystal cell were washed.

### [Example 1]

A lyotropic liquid crystal aqueous solution obtained in Reference Example 7 was applied to the surface of the first optical element subjected to the alkali treatment obtained in Reference Example 3 using a bar coater (wire bar H1.5 manufactured by BOSHMAN), and dried while air was blown to the applied surface in a thermostatic chamber at 23°C. After that, the lyotropic liquid crystal aqueous solution was further dried at 40°C for 3 minutes in an air circulating dryingoven. Consequently, a second optical element whose refractive index ellipsoid exhibited a relationship of nx > nz > ny was obtained on the surface of the first optical element. The thickness, Re [590], and NZ coefficient of the obtained second optical element were 0.65 µm, 197 nm, and 0.34, respectively.
The polarizer protective film obtained in Reference Example 2 was attached to one surface of the polarizer obtained in Reference Example 1 and the first optical element side of the laminate of the first optical element/second optical element obtained in the above was attached to the other surface of the polarizer obtained in Reference Example 1 by roll-to-roll to obtain a polarizing plate (A). At this time, they were arranged so that a slow axis of the second optical element was substantially perpendicular to an absorption axis of the polarizer.
On the other hand, the polarizer protective film obtained in Reference Example 2 was attached to one surface of the polarizer obtained in Reference Example 1 and the third optical element obtained in Reference Example 8 was attached to the other surface of the polarizer obtained in Reference Example 1 by roll-to-roll to obtain a polarizing plate (B).
The above polarizing plate (A) was laminated on the viewer side surface of the liquid crystal cell obtained in Reference Example 9 and the above polarizing plate (B) was laminated on the backlight side surface of the liquid crystal cell via an acrylic pressure-sensitive adhesive (thickness: 20 µm). At this time, they were arranged so that an absorption axis of the polarizer in the polarizing plate (A) was substantially perpendicular to an absorption axis of the polarizer in the polarizing plate (B). Thus, a liquid crystal panel (1) was obtained.

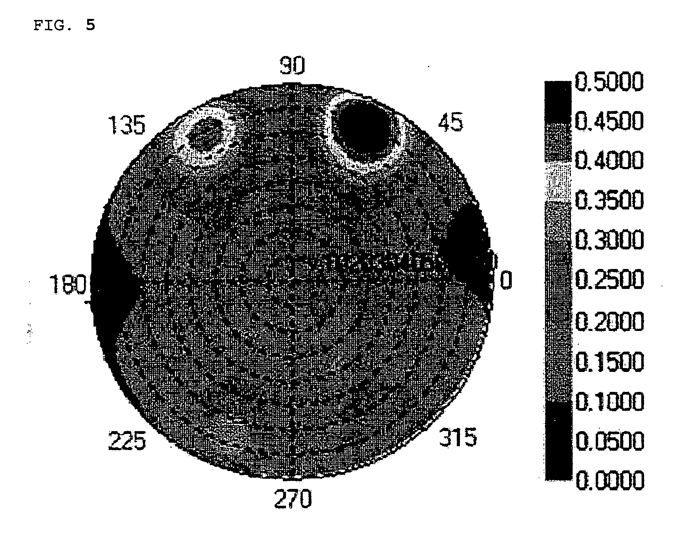

FIG. 5 shows a radar chart illustrating the contrast, light leakage, and color shift of the obtained liquid crystal panel (1).
As shown in FIG. 5, the liquid crystal panel (1) has a high contrast ratio in an oblique direction, less light leakage, and a small color shift in an oblique direction.

### [Comparative Example 1]

The polarizer protective films obtained in Reference Example 2 were attached to both surfaces of the polarizer obtained inReference Example 1 by roll-to-roll to obtain a polarizing plate (C).
The above polarizing plates (C) were laminated on the surfaces of the liquid crystal cell obtained in Reference Example 9 on the viewer side and the backlight side via an acrylic pressure-sensitive adhesive (thickness: 20 µm). At this time, they were arranged so that an absorption axis of the polarizer in the polarizing plate (C) on the viewer side was substantially perpendicular to an absorption axis of the polarizer in the polarizing plate (C) on the backlight side. Thus, a liquid crystal panel (C1) was obtained.

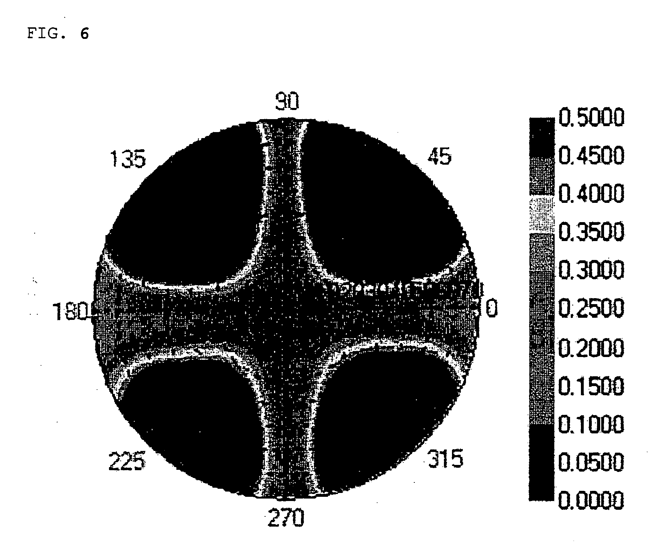

FIG. 6 shows a radar chart illustrating the contrast, light leakage, and color shift of the obtained liquid crystal panel (C1) .
As shown in FIG. 6, the liquid crystal panel (C1) has a lower contrast ratio in an oblique direction, much more light leakage, and a larger color shift in an oblique direction, compared with the liquid crystal panel (1) obtained in Example 1.

### INDUSTRIAL APPLICABILITY

As described above, the liquid crystal panel of the present invention has a high contrast ratio in an oblique direction, less light leakage, and a small color shift in an oblique direction, and can be greatly reduced in thickness. Therefore, the liquid crystal panel of the present invention is considered to be very useful for the enhancement of display characteristics of a thin liquid crystal display apparatus. The liquid crystal panel of the present invention is preferably used for a liquid crystal display apparatus and a liquid crystal television.

## Claims

1. A liquid crystal panel, comprising: a liquid crystal cell; a first polarizer arranged on one side of the liquid crystal cell; a second polarizer arranged on the other side of the liquid crystal cell; a first optical element arranged between the first polarizer and the liquid crystal cell; and a second optical element arranged between the first optical element and the liquid crystal cell,
wherein the first optical element has substantially optically negative uniaxial property, and
the second optical element exhibits are fractive index ellipsoid of nx > nz > ny, and is formed of one or more kinds of polycylic compound having a -SO₃M group and/or a -COOM group (M represents a counter ion).

2. The liquid crystal panel according to claim 1, wherein the polycyclic compound has a heterocycle.

3. The liquid crystal panel according to claim 2, wherein a nitrogen atom is contained as a heteroatom in the heterocycle of the polycylic compound.

4. The liquid crystal panel according to claim 3, wherein the polycyclic compound is represented by General Formula (1). 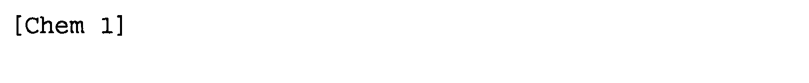 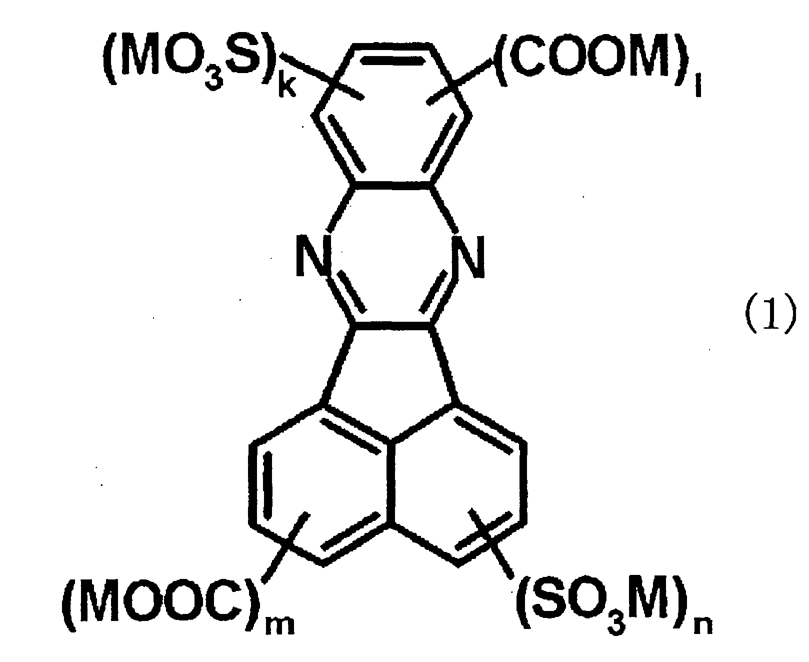 where General Formula (1), M represents a counter ion, k and 1 respectively represent integers of 0 to 4 independently, the sum of k and 1 is an integer of 0 to 4, m and n respectively represent integers of 0 to 6 independently, the sum of m and n is an integer of 0 to 6, and k, 1, m and n do not represent 0 at the same time.

5. The liquid crystal panel according to any one of claims 1 to 4, wherein an Nz coefficient of the second optical clement is 0.05 to 0.45.

6. The liquid crystal panel according to any one of claims 1 to 5, wherein an in-plane retardation Re [590] of the second optical element at a wavelength of 590 nm and 23°C is 100 to 300 nm.

7. The liquid crystal panel according to any one of claims 1 to 6, wherein a thickness of the second optical element is 0.05 to 10 µm.

8. The liquid crystal panel according to any one of claims 1 to 7, wherein a thickness direction retardation Rth[590] of the first optical element at a wavelength of 590 nm and 23°C is 10 to 100 nm.

9. The liquid crystal panel according to any one of claims 1 to 8, wherein the first optical element includes a polymer film containing a cellulose ester as a main component.

10. The liquid crystal panel according to any one of claims 1 to 9, where in as low axis of the second optical element is substantially perpendicular to an absorption axis of the first polarizer.

11. The liquid crystal panel according to any one of claims 1 to 10, wherein a third optical element having substantially optical isotropy is arranged between the second polarizer and the liquid crystal cell.

12. The liquid crystal panel according to claim 11, wherein an absolute value of a thickness direction retardation Rth[590] of the third optical element at a wavelength of 590 nm and 23°C is 10 nm or less.

13. The liquid crystal panel according to any one of claims 11 and 12, wherein the third optical element includes a polymer film containing, as a main component, at least one selected from a cellulose ester, a cycloolefin-based resin obtained by hydrogenating a ring-opening polymer of a norbornene-based monomer, an addition copolymer of a norbornene-based monomer and an α-olefin monomer, and an addition copolymer of a maleimide-based monomer and an olefin monomer.

14. The liquid crystal panel according to any one of claims 1 to 13 , wherein a drive mode of the liquid crystal cell is an IPS mode.

15. A liquid crystal display apparatus comprising the liquid crystal panel according to any one of claims 1 to 14.
